# EUROPEAN PATENT APPLICATION

(11) **EP 4 525 272 A1**
(43) Date of publication of application: **19.03.2025**
(21) Application number: 23870598.2
(22) Date of filing: 21.09.2023
(51) Int. Cl.: H02J 50/90

(54) **CHARGING COIL MODULE AND PRODUCT RELATED THERETO, AND PREPARATION METHOD FOR CHARGING COIL MODULE**

(30) Priority: 29.09.2022 CN 202211202964
(71) Applicant: Huawei Technologies Co., Ltd., Shenzhen, Guangdong 518129 (CN)
(72) Inventor: GUO, Xuan, Shenzhen, Guangdong 518129 (CN); WANG, Ke, Shenzhen, Guangdong 518129 (CN); WEN, Chong, Shenzhen, Guangdong 518129 (CN)
(74) Representative: Körber, Martin Hans
(86) International application number: PCT/CN2023/120512
(87) International publication number: WO 2024/067366

(57) **Abstract**

This application provides a charging coil module and a related product thereof, and a preparation method for a charging coil module. The charging coil module includes a base material and a first coil. The base material includes a first surface. The first coil is disposed on the first surface. A quantity of turns of the first coil is greater than or equal to 2. A distance between two adjacent turns of the first coil ranges from 40 micrometers to 100 micrometers. Narrow-spacing arrangement can be implemented in the charging coil module in this application. The distance between two adjacent turns of the first coil is reduced, so that the charging coil module is miniaturized.

## Description

This application claims priority to Chinese Patent Application No. 202211202964.5, filed with the China National Intellectual Property Administration on September 29, 2022 and entitled "CHARGING COIL MODULE AND RELATED PRODUCT THEREOF, AND PREPARATION METHOD FOR CHARGING COIL MODULE", which is incorporated herein by reference in its entirety.

### TECHNICAL FIELD

This application relates to the wireless charging field, and in particular, to a charging coil module and a related product thereof, and a preparation method for a charging coil module.

### BACKGROUND

Currently, as functions of a smartphone increase, functional components in the smartphone accordingly increase. As a result, available space in the entire smartphone also gradually decreases. How to reduce a size of a charging coil module to release more available space in the smartphone becomes a research direction.

### SUMMARY

Embodiments of this application provide a charging coil module, a related product including the charging coil module, and a preparation method including the charging coil module, to obtain a charging coil module with a small size and a related product including the charging coil module.

According to a first aspect, a charging coil module is provided. The charging coil module includes a base material and a first coil. The base material includes a first surface. The first coil is disposed on the first surface. A quantity of turns of the first coil is greater than or equal to 2. A distance between two adjacent turns of the first coil ranges from 40 micrometers to 100 micrometers.

It may be understood that the distance between two adjacent turns of the first coil of the charging coil module in this application ranges from 40 micrometers to 100 micrometers, so that narrow-spacing arrangement can be implemented in the first coil, in other words, narrow-spacing arrangement can be implemented in the charging coil module. When sizes are the same, compared with a charging coil module in which narrow-spacing arrangement is not implemented, the charging coil module in this application has a higher metal content per unit area, so that a charging loss is effectively reduced. This helps prolong duration for maintaining a peak value of 50 W in a charging process of the charging coil module, and improves charging efficiency.

In addition, when outer diameters of the charging coil modules are the same, compared with the charging coil module in which narrow-spacing arrangement is not implemented, in the charging coil module in this application, a distance between two adjacent turns can be reduced without reducing a volume of a wire in the first coil, so that a thickness of the first coil is reduced, to reduce a thickness of the entire charging coil module. In other words, in the charging coil module in this application, the distance between two adjacent turns of the first coil may be reduced, so that the charging coil module is miniaturized.

In a possible implementation, each turn of the first coil includes a first conductive part and a second conductive part. The first conductive part is disposed on the first surface. The second conductive part covers the first conductive part. In this way, the second conductive part covers the first conductive part, so that the distance between two adjacent turns of the first coil can be reduced. This helps implement narrow-spacing arrangement in the charging coil module.

In a possible implementation, the second conductive part is formed on the first conductive part by using an electroplating process. The electroplating process is lead electroplating.

In a possible implementation, a thickness of the first conductive part ranges from 10 micrometers to 60 micrometers. In this way, the first conductive part is thin. It is easy to make the distance between two adjacent turns of the first coil narrower. This helps implement narrow-spacing arrangement in the charging coil module.

In a possible implementation, the thickness of the first coil is greater than 50 micrometers. It may be understood that when the thickness of the first coil is greater than 50 micrometers, the first coil is thick. In this case, compared with a conventional charging coil module in which a thick first conductive part is directly formed to form the first coil, in this application, the first conductive part covers the second conductive part, so that the distance between two adjacent turns of the first coil can be smaller. This helps implement narrow-spacing arrangement in the charging coil module.

In a possible implementation, the base material includes a second surface. The second surface is disposed opposite to the first surface. The charging coil module further includes a second coil. The second coil is disposed on the second surface. A quantity of turns of the second coil is greater than or equal to 2. A distance between two adjacent turns of the second coil ranges from 40 micrometers to 100 micrometers.

It may be understood that a volume of metal in the charging coil module can be increased by disposing the second coil, to improve charging efficiency of the charging coil module. In addition, narrow-spacing arrangement is also implemented in the second coil. In this way, narrow-spacing arrangement is implemented in both the first coil and the second coil, in other words, narrow-spacing arrangement is implemented in the charging coil module. When sizes are the same, compared with a charging coil module in which narrow-spacing arrangement is not implemented, the charging coil module in this application has a higher metal content per unit area, so that a charging loss is effectively reduced. This helps prolong duration for maintaining a peak value of 50 W in a charging process of the charging coil module, and improves charging efficiency.

In addition, when the outer diameters of the charging coil modules are the same, compared with the charging coil module in which narrow-spacing arrangement is not implemented, in the charging coil module in this application, a distance between two adjacent first sub-coils and a distance between two adjacent second sub-coils can be reduced without reducing volumes of wires in the first coil and the second coil, so that thicknesses of the first coil and the second coil are reduced. In other words, in the charging coil module in this application, the distance between two adjacent turns of the first coil and the distance between two adjacent turns of the second coil may be reduced, so that the charging coil module is miniaturized.

In a possible implementation, the charging coil module further includes a first cover film, a first nanocrystalline layer, and a first graphite layer. The first cover film is disposed on a side that is of the first coil and that is away from the base material. The first nanocrystalline layer and the first graphite layer are sequentially stacked on the first cover film. The first coil has first accommodating space. The first accommodating space is a groove or a through hole. A part of the first cover film is disposed in the first accommodating space. A part of the first nanocrystalline layer is disposed in the first accommodating space.

It may be understood that when volumes of the first nanocrystalline layer and the first graphite layer in the charging coil module remain unchanged, compared with a charging coil module in which the first accommodating space is not disposed in the first coil, in the charging coil module in this application, the first accommodating space may be filled with the part of the first nanocrystalline layer, to reduce a thickness of the first nanocrystalline layer, so that an overall thickness of the charging coil module is reduced. This facilitates miniaturization of the charging coil module.

When a volume of the charging coil module remains unchanged, compared with the charging coil module in which the first accommodating space is not disposed in the first coil, in the charging coil module in this application, space of the first accommodating space may be filled with more nanocrystalline, to increase a volume of the first nanocrystalline layer. This reduces a magnetic loss of the charging coil module, and helps improve fast charging performance of the charging coil module. Alternatively, in the charging coil module, the first accommodating space may be filled with more graphite sheets, to increase a volume of the first graphite layer. This helps improve efficiency of dissipating heat for the charging coil module.

In a possible implementation, the first nanocrystalline layer is provided with a first recessed region. A part of the first graphite layer is disposed in the first recessed region. In this way, when the volumes of the first nanocrystalline layer and the first graphite layer in the charging coil module remain unchanged, compared with a charging coil module in which the first accommodating space is not disposed in the first coil and no first recessed region is disposed on the first nanocrystalline layer, in the charging coil module in this application, the first accommodating space may be filled with the part of the first nanocrystalline layer, and the first recessed region may be filled with the part of the first graphite layer, to reduce a thickness of the first graphite layer, so that the overall thickness of the charging coil module is reduced. This facilitates miniaturization of the charging coil module.

When the thicknesses of the first nanocrystalline layer and the first graphite layer in the charging coil module remain unchanged, compared with the charging coil module in which the first accommodating space is not disposed in the first coil and no first recessed region is disposed on the first nanocrystalline layer, in the charging coil module in this application, the space of the first accommodating space may be filled with the part of the first nanocrystalline layer, and the first recessed region may be filled with more graphite sheets, to increase the volume of the first graphite layer, so that a heat dissipation capability of the charging coil module is improved. This helps increase charging power of the charging coil module.

In a possible implementation, the first graphite layer is provided with a second recessed region. A part of the first nanocrystalline layer is disposed in the second recessed region. In this way, the charging coil module may be filled with more nanocrystalline, so that efficiency of reducing a magnetic loss by the charging coil module is higher.

In a possible implementation, the first coil encloses a first hollow region. The first accommodating space is spaced from the first hollow region. Alternatively, the first accommodating space communicates with the first hollow region. In this way, when the first accommodating space communicates with the first hollow region, the first accommodating space may further be filled with more nanocrystalline by using space of the first hollow region, or the thickness of the first nanocrystalline layer or the thickness of the first graphite layer is further reduced.

In a possible implementation, the first coil includes a first part and a second part that are separately disposed. The first accommodating space is located between the first part and the second part. Alternatively, the first coil includes a first part. The first accommodating space is located on a side of the first part.

In a possible implementation, the first coil has first accommodating space. The first accommodating space is a groove or a through hole. The charging coil module includes a magnetic piece. The magnetic piece is disposed in the first accommodating space. In this way, the magnetic piece is disposed in the first accommodating space, so that when the charging coil module is used in the electronic device, accurate positioning with a charger can be implemented, to improve charging efficiency.

In a possible implementation, the charging coil module further includes a second cover film, a second nanocrystalline layer, and a second graphite layer. The second cover film is disposed on a side that is of the second coil and that is away from the base material. The second nanocrystalline layer and the second graphite layer are sequentially stacked on the second cover film. The second coil has second accommodating space. The second accommodating space is a groove or a through hole. A part of the second cover film is disposed in the second accommodating space. A part of the second nanocrystalline layer is disposed in the second accommodating space. It may be understood that the second cover film is disposed, so that a short circuit of the wire in the second coil can be avoided. In addition, the second nanocrystalline layer is disposed, so that a magnetic loss of the charging coil module can be reduced, and a fast charging capability of the charging coil module can be improved. In addition, the second graphite layer is disposed, so that a heat dissipation capability of the charging coil module can be improved.

According to a second aspect, an electronic device is provided. The electronic device includes a battery and the foregoing charging coil module. The charging coil module is configured to charge the battery. It may be understood that narrow-spacing arrangement is implemented in the charging coil module in the electronic device in this application. When sizes of charging coil modules are the same, the charging coil module in this application has a higher metal content per unit area, so that a charging loss is effectively reduced. This helps prolong duration for maintaining a peak value of 50 W in a charging process of the charging coil module, and improves charging efficiency. In other words, the electronic device in this application has higher charging efficiency. In addition, when outer diameters of the charging coil modules are the same, the charging coil module in this application may be thinner, to better meet a thinning requirement of the electronic device.

According to a third aspect, a charger is provided. The charger includes a housing and the foregoing charging coil module. The charging coil module is disposed on the housing. It may be understood that narrow-spacing arrangement is implemented in the charging coil module in the charger in this application. When sizes of charging coil modules are the same, the charging coil module in this application has a higher metal content per unit area, so that a charging loss is effectively reduced. This helps prolong duration for maintaining a peak value of 50 W in a charging process of the charging coil module, and improves charging efficiency. In other words, the charger in this application has higher charging efficiency. In addition, when outer diameters of the charging coil modules are the same, the charging coil module in this application may be thinner, to better meet a thinning requirement of the charger.

According to a fourth aspect, a charging system is provided. The charging system includes an electronic device and a charger. At least one of the electronic device and the charger includes the foregoing charging coil module. The charger is configured to charge the electronic device. In this way, when at least one of the electronic device and the charger in the charging system has a charging coil module in which narrow-spacing arrangement is implemented, the charging system has higher operating efficiency.

According to a fifth aspect, a preparation method for a charging coil module is provided. The preparation method for a charging coil module includes: etching a conductive layer of a substrate, to form a first initial coil; and electroplating a second conductive part on each turn of the first initial coil, to form a first coil. A distance between two adjacent turns of the first coil ranges from 40 micrometers to 100 micrometers.

It may be understood that narrow-spacing arrangement can be implemented in the charging coil module prepared by using the preparation method in this application. This helps improve charging efficiency of the charging coil module, or implement miniaturization of the entire charging coil module.

In a possible implementation, before the step of etching a conductive layer of a substrate, the method further includes: electroplating a second conductive sub-layer at a first conductive sub-layer of the substrate, to form the conductive layer. In this way, the conductive layer with a specific thickness may be formed through electroplating, to facilitate preparation in a subsequent step.

In a possible implementation, in the step of etching a conductive layer of a substrate, the method further includes: etching the conductive layer of the substrate, to form the first initial coil and etching space.

In the step of electroplating a second conductive part on each turn of the first initial coil, the method further includes: electroplating the second conductive part on each turn of the first initial coil, to form the first coil. The second conductive part located in the etching space encloses first accommodating space. After the step of electroplating the second conductive part on each turn of the first initial coil, the method further includes: forming a first cover film on a surface of the first coil, where a part of the first cover film is disposed in the first accommodating space; forming a first nanocrystalline layer on a surface of the first cover film, where a part of the first nanocrystalline layer is disposed in the first accommodating space; and forming a first graphite layer on a surface of the first nanocrystalline layer. In this way, the first accommodating space is disposed in the first coil, so that the charging coil module can have more available space (namely, space of the first accommodating space).

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a diagram of a structure of a wireless charging system according to an embodiment of this application;
FIG. 2 is a diagram of a structure of a charging coil module in an implementation according to an embodiment of this application;
FIG. 3 is an exploded view of the charging coil module shown in FIG. 2;
FIG. 4 is a diagram of a partial structure of the charging coil module shown in FIG. 2;
FIG. 5 is a partial sectional view of the structure shown in FIG. 4 on a line B-B;
FIG. 6 is a diagram of a structure of a second coil shown in FIG. 3;
FIG. 7 is a diagram of a structure of a first coil shown in FIG. 3;
FIG. 8 is a partial sectional view of the charging coil module shown in FIG. 2 on a line A-A;
FIG. 9 is a flowchart of a preparation process of the charging coil module shown in FIG. 2;
FIG. 10 to FIG. 16 are diagrams of a preparation process of the charging coil module shown in FIG. 2;
FIG. 17 is a partial sectional view of the charging coil module shown in FIG. 8 in another implementation;
FIG. 18 is a partial sectional view of the charging coil module shown in FIG. 8 in another implementation;
FIG. 19 is a partial sectional view of the charging coil module shown in FIG. 8 in another implementation;
FIG. 20 is a diagram of a structure of a first coil of the charging coil module shown in FIG. 19;
FIG. 21 is a partial sectional view of the charging coil module shown in FIG. 8 in another implementation;
FIG. 22 is a partial sectional view of the charging coil module shown in FIG. 8 in another implementation;
FIG. 23 is a diagram of a preparation process of the charging coil module shown in FIG. 22;
FIG. 24 is a partial sectional view of the charging coil module shown in FIG. 22 in another implementation;
FIG. 25 is a partial sectional view of the charging coil module shown in FIG. 22 in another implementation;
FIG. 26 is a partial sectional view of the charging coil module shown in FIG. 22 in another implementation;
FIG. 27 is a partial sectional view of the charging coil module shown in FIG. 22 in another implementation;
FIG. 28 is a partial sectional view of the charging coil module shown in FIG. 8 in another implementation;
FIG. 29 is a top view of a partial structure of the charging coil module shown in FIG. 28;
FIG. 30 is a partial sectional view of the charging coil module shown in FIG. 28 in another implementation;
FIG. 31 is a partial sectional view of the charging coil module shown in FIG. 28 in another implementation; and
FIG. 32 is a partial sectional view of the charging coil module shown in FIG. 28 in another implementation.

### DESCRIPTION OF EMBODIMENTS

The following describes embodiments of this application with reference to the accompanying drawings in embodiments of this application.

In the descriptions of embodiments of this application, it should be noted that, unless otherwise specified or limited expressly, the term "connection" should be understood in a broad sense, for example, the term "connection" may be a detachable connection or an undetachable connection, or may be a direct connection or an indirect connection by using an intermediate medium. The orientation terms mentioned in embodiments of this application, for example, "left" and "right", are merely directions with reference to the accompanying drawings. Therefore, the orientation terms are used to better and more clearly describe and understand embodiments of this application, rather than indicating or implying that an indicated apparatus or element needs to have a specific orientation or be constructed and operated in the specific orientation, and therefore cannot be construed as a limitation on embodiments of this application. "A plurality of" means at least two.

The terms "first", "second", "third", and "fourth" in embodiments of this application are merely intended for a purpose of description, and shall not be understood as an indication or implication of relative importance or implicit indication of a quantity of indicated technical features. Therefore, a feature limited by "first", "second", "third", and "fourth" may explicitly or implicitly include one or more features.

The term "and/or" in embodiments of this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Reference to "an implementation", "some implementations", or the like described in this specification indicates that one or more embodiments of this application include a specific feature, structure, or characteristic described with reference to embodiments. Therefore, statements, such as "in some implementations" and "in other implementations", that appear at different places in this specification do not necessarily mean referring to a same embodiment. Instead, the statements mean "one or more but not all of embodiments", unless otherwise specifically emphasized. The terms "include", "have", and their variants all mean "including but not limited to", unless otherwise specifically emphasized.

It may be understood that the specific embodiments described herein are merely used to explain a related invention, but are not intended to limit the present invention. In addition, it should be further noted that, for ease of description, only a part related to the present invention is shown in the accompanying drawings.

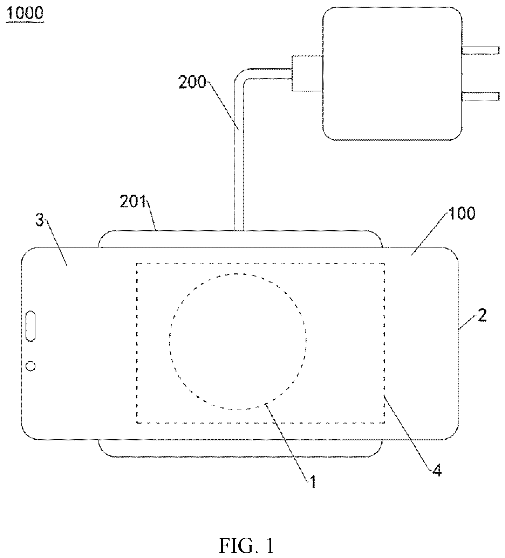

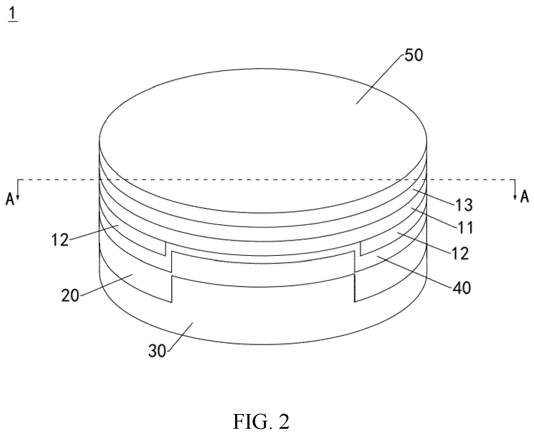

FIG. 1 is a diagram of a structure of a wireless charging system 1000 according to an embodiment of this application. FIG. 2 is a diagram of a structure of a charging coil module 1 in an implementation according to this application.

As shown in FIG. 1, the wireless charging system 1000 may include an electronic device 100 and a wireless charger 200. When the wireless charger 200 is inserted into a power supply, the wireless charger 200 may be configured to wirelessly charge the electronic device 100. The charging coil module 1 provided in this application may be disposed in at least one of the electronic device 100 and the wireless charger 200. The electronic device 100 may be a mobile phone, a tablet computer, a foldable terminal device, a wearable device, or a device in another form that has a wireless charging function. The wearable device may be a smart band, a smartwatch, smart glasses, or the like. In the embodiment shown in FIG. 1, an example in which the electronic device 100 is a mobile phone is used for description.

As shown in FIG. 1 and FIG. 2, the electronic device 100 may include the charging coil module 1, a device housing 2, a display 3, and a battery 4. The display 3 may be fastened to the device housing 2. The display 3 and the device housing 2 may enclose internal space of the electronic device 100. Both the charging coil module 1 and the battery 4 may be located in the internal space of the electronic device 100. In this case, the charging coil module 1 may be used as a receive end coil.

It should be noted that FIG. 1 merely schematically shows some components of the electronic device 100. Actual shapes and actual sizes of these components are not limited by FIG. 1 and the following accompanying drawings. In addition, because both the charging coil module 1 and the battery 4 are internal components of the electronic device 100, FIG. 1 schematically shows the charging coil module 1 and the battery 4 by using dashed lines. It should be understood that when the electronic device 100 is in another form, the electronic device 100 may not include the display 3, or the electronic device 100 may include a plurality of displays 3.

As shown in FIG. 1 and FIG. 2, the charging coil module 1 may be roughly in a circular disc shape. The charging coil module 1 is electrically connected to the battery 4. When the electronic device 100 is in a charging state, the charging coil module 1 may charge the battery 4.

In some implementations, the wireless charger 200 may alternatively include the charging coil module 1. The charging coil module 1 may be disposed on a housing 201 of the wireless charger 200. In this case, the charging coil module 1 may be used as a transmit end coil.

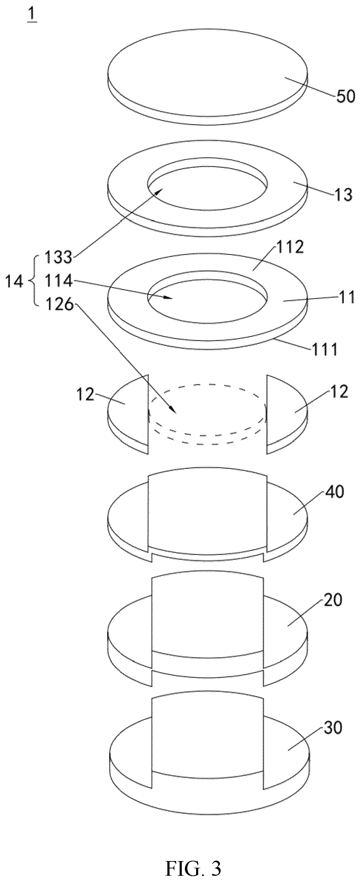

FIG. 3 is an exploded view of the charging coil module 1 shown in FIG. 2.

As shown in FIG. 3, the charging coil module 1 may include a base material 11, a first coil 12, a second coil 13, a first nanocrystalline layer 20, a first graphite layer 30, a first cover film 40, and a second cover film 50. For example, a material of the first nanocrystalline layer 20 may be nanocrystalline. A material of the first graphite layer 30 may be a graphite sheet. A material of the base material 11 may be an insulation material. For example, a material of the base material 11 may be polyimide (Polyimide, PI). Materials of both the first coil 12 and the second coil 13 may be metal. For example, the materials of both the first coil 12 and the second coil 13 may be copper.

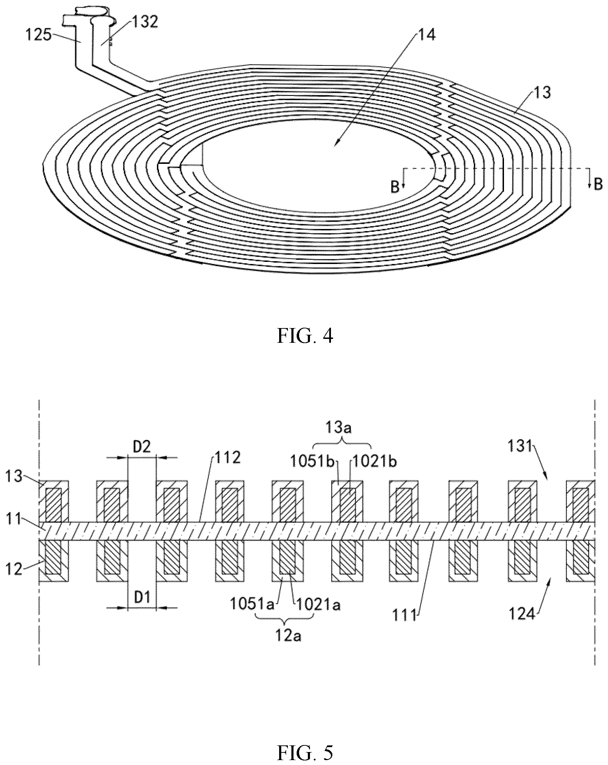

FIG. 4 is a diagram of a partial structure of the charging coil module 1 shown in FIG. 2. FIG. 5 is a partial sectional view of the structure shown in FIG. 4 on a line B-B. FIG. 4 shows structures of the base material 11, the first coil 12, and the second coil 13 of the charging coil module 1. The cross-sectional line B-B in FIG. 4 may pass through a center of the charging coil module 1.

As shown in FIG. 3 to FIG. 5, the base material 11 may include a first surface 111 and a second surface 112 that are disposed opposite to each other. The first coil 12 may be disposed on the first surface 111 of the base material 11. The second coil 13 may be disposed on the second surface 112 of the base material 11.

As shown in FIG. 3 and FIG. 4, the charging coil module 1 may have a coil through hole 14. When the charging coil module 1 is in a working state, a magnetic field line of the charging coil module 1 may pass through the coil through hole 14.

For example, the first coil 12 may enclose a first hollow region 126. The second coil 13 may enclose a second hollow region 133. The base material 11 may enclose a third hollow region 114. The first hollow region 126, the second hollow region 133, and the third hollow region 114 communicate with each other, and jointly form the coil through hole 14.

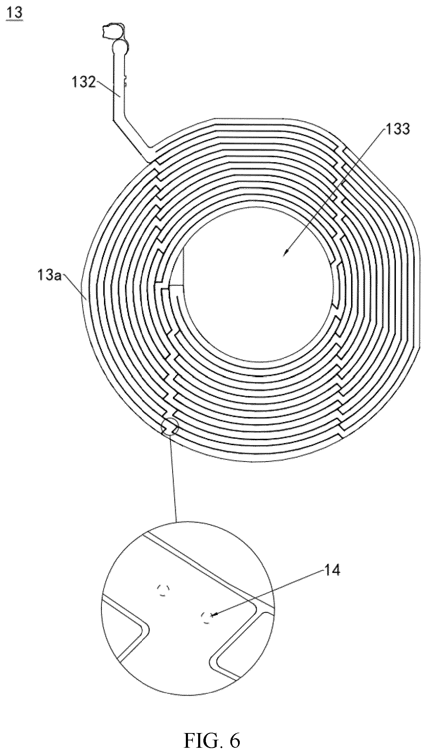

FIG. 6 is a diagram of a structure of the second coil 13 shown in FIG. 3.

As shown in FIG. 6, the second coil 13 may be formed by encircling a wire a plurality of times. A quantity of turns of the second coil 13 is greater than or equal to 2. The second coil 13 includes a plurality of second sub-coils 13a spaced from each other. One second sub-coil 13a may form one turn of the second coil 13. A spacing D2 between two adjacent second sub-coils 13a, namely, a distance between two adjacent turns of the second coil 13, may range from 40 micrometers to 100 micrometers. For example, the spacing between two adjacent second sub-coils 13a may be 40 micrometers, 50 micrometers, 60 micrometers, 80 micrometers, or 100 micrometers. In this case, a wire spacing of the second coil 13 is narrow. Narrow-spacing arrangement may be implemented in the second coil 13. It may be understood that a second gap 131 may be formed between two adjacent second sub-coils 13a. The spacing between two adjacent second sub-coils 13a may be a minimum width of the second gap 131. For example, the second coil 13 may be roughly in a circular ring shape. The second hollow region 133 of the second coil 13 may be in a circular shape.

In some implementations, the second sub-coil 13a may be formed by encircling one or more wires. For example, when the second sub-coil 13a is formed by encircling one wire, two adjacent second sub-coils may be connected head to tail. In this case, the second sub-coils 13a in the second coil 13 may be electrically connected in series. For example, when the second sub-coil 13a is formed by encircling a plurality of wires, the plurality of wires are spaced from each other. One wire of the secon d sub-coil 13a and a wire of another second sub-coil adjacent to the second sub-coil 13a may be connected head to tail. In this case, the plurality of second sub-coils 13a may be electrically connected to each other through the first coil 12. It should be noted that electrical connection relationships between the plurality of second sub-coils 13a and the first coil 12 are specifically described below with reference to the accompanying drawings. Details are not described herein again.

As shown in FIG. 5, the second sub-coil 13a may include a first conductive part 1021b and a second conductive part 1051b of the second coil 13. The first conductive part 1021b of the second coil 13 is disposed on the second surface 112. The second conductive part 1051b of the second coil 13 may cover the first conductive part 1021b. In this case, a cross-sectional shape of the second conductive part 1051b of the second coil 13 is roughly a "concave" shape. It should be noted that, for ease of understanding, some accompanying drawings in subsequent accompanying drawings show only an entirety of the second sub-coil 13a, but do not show an internal structure of the second sub-coil 13a.

In some implementations, as shown in FIG. 4, the second coil 13 may further include a second lead 132. For example, the second lead 132 may be electrically connected to a second sub-coil in an outermost circle.

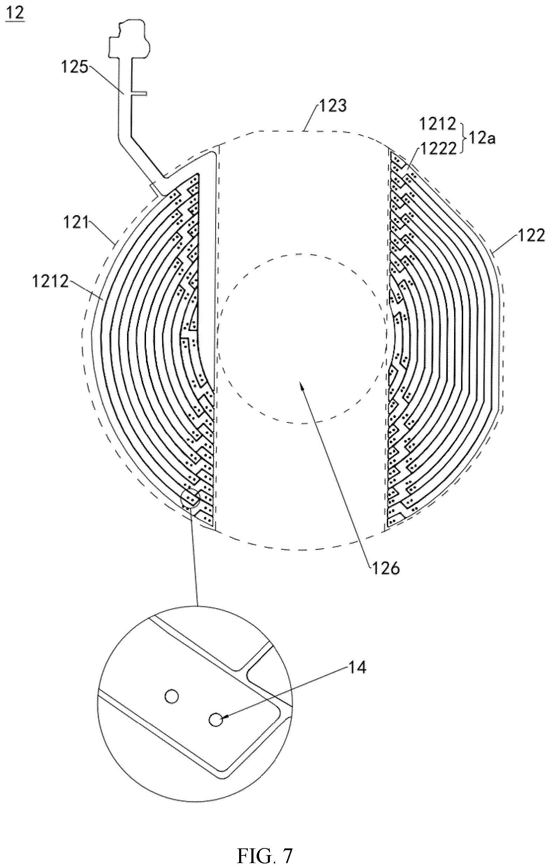

FIG. 7 is a diagram of a structure of the first coil 12 shown in FIG. 3.

As shown in FIG. 7, the first coil 12 has first accommodating space 123. The first accommodating space 123 may divide the first coil 12 into a first part 121 and a second part 122. For example, the first accommodating space 123 may be located between the first part 121 and the second part 122. In other words, the first part 121 and the second part 122 may be located on two sides of the first accommodating space 123. In another implementation, the first coil 12 may alternatively not include the second part 122. In this case, the first part 121 and the first accommodating space 123 may be disposed side by side. In another implementation, the first accommodating space 123 may alternatively not be disposed in the first coil 12.

For example, the accommodating space 123 of the first coil 12 may communicate with the first hollow region 126. In other words, the first accommodating space 123 may communicate with the coil through hole 14. In another implementation, the first accommodating space 123 may alternatively not communicate with the first hollow region 126. In this case, the first accommodating space 123 is spaced from the first hollow region 126.

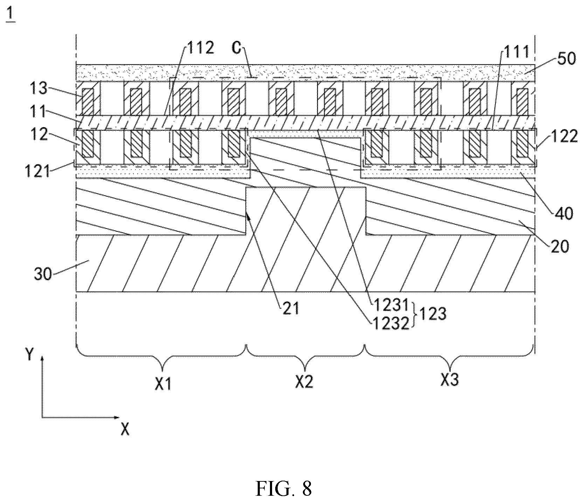

It should be noted that FIG. 7 schematically shows the first part 121, the second part 122, the first accommodating space 123, and the hollow region 126 of the first coil 12 by using dashed lines. FIG. 8 schematically shows a partial structure of the first part 121 and a partial structure of the second part 122 by using short dashed lines. For ease of illustration, regions enclosed by dashed lines are slightly larger than the first part 121, the second part 122, and the first accommodating space 123. All of the first part 121, the second part 122, and the first accommodating space 123 that are schematically shown by using dashed lines in subsequent accompanying drawings are also slightly greater than an actual first part 121, an actual second part 122, and actual accommodating space 123.

As shown in FIG. 5 and FIG. 7, a quantity of turns of the first coil 12 is greater than or equal to 2. The first coil 12 may include a plurality of first sub-coils 12a spaced from each other. One first sub-coil 12a may form one turn of the first coil 12. A spacing D1 between two adjacent first sub-coils 12a, namely, a distance between two adjacent turns of the first coil 12, may range from 40 micrometers to 100 micrometers. For example, the spacing between two adjacent first sub-coils 12a may be 40 micrometers, 50 micrometers, 60 micrometers, 80 micrometers, or 100 micrometers. In this case, a wire spacing of the first coil 12 is narrow. Narrow-spacing arrangement may be implemented in the first coil 12. It may be understood that a first gap 124 may be formed between two adjacent first sub-coils 12a. The spacing between two adjacent first sub-coils 12a may be a minimum width of the first gap 124.

For example, a plurality of first gaps 124 of the first coil 12 and a plurality of second gaps 131 of the second coil 13 may be disposed in a one-to-one correspondence.

For example, the wire spacing of the first coil 12 may be equal to a wire spacing of the second coil 13.

For example, the first part 121 of the first coil 12 may include a plurality of first line segments 1212 spaced from each other. The second part 122 may include a plurality of second line segments 1222 spaced from each other. The plurality of first line segments 1212 and the plurality of second line segments 1222 are disposed in a one-to-one correspondence, and form the plurality of first sub-coils 12a of the first coil 12. For example, an outermost first line segment 1212 in the first part 121 and an outermost second line segment 1222 in the second part 122 may jointly form the first sub-coil 12a in an outermost circle of the first coil 12. The first line segment 1212 may be formed by encircling one or more wires. The second line segment 1222 may be formed by encircling one or more wires.

As shown in FIG. 5, the first sub-coil 12a may include a first conductive part 1021a and a second conductive part 1051a of the first coil 12. The first conductive part 1021a of the first coil 12 is disposed on the first surface 111. The second conductive part 1051a of the first coil 12 may cover the first conductive part 1021a. In this case, a cross-sectional shape of the second conductive part 1051a of the first coil 12 is also roughly a "concave" shape. It should be noted that, for ease of understanding, some accompanying drawings in subsequent accompanying drawings show only an entirety of the first sub-coil 12a, but do not show an internal structure of the first sub-coil 12a.

In some implementations, the second conductive part 1051a is formed on the first conductive part 1021a of the first coil 12 by using an electroplating process.

For example, the electroplating process may be lead electroplating.

FIG. 8 is a partial sectional view of the charging coil module 1 shown in FIG. 2 on a line A-A.

As shown in FIG. 8, the first accommodating space 123 may expose a part of the first surface 111 of the base material 11, in other words, the first accommodating space 123 is in a completely hollow-out state. In this case, the first accommodating space 123 is a through hole. The part of the first surface 111 exposed inside the first accommodating space 123 forms a bottom wall 1231 of the first accommodating space 123. An inner side surface of a part of the first coil 12 exposed inside the first accommodating space 123 forms a side wall 1232 of the first accommodating space 123.

For example, both the first sub-coil 12a and the second sub-coil 13a may be formed by encircling a plurality of wires, and the plurality of wires are spaced from each other. A wire of the second sub-coil 13a and a wire of another second sub-coil 13a adjacent to the second sub-coil 13a are connected head to tail. The charging coil module 1 may further include a plurality of vias 14. All of the plurality of vias 14 may penetrate the first coil 12 and the base material 11. The plurality of wires in the first coil 12 may be electrically connected to the plurality of wires in the second coil 13 in a one-to-one correspondence through the plurality of vias 14. In this case, the plurality of wires in the first line segment 1212 may be in a parallel relationship. The plurality of wires in the second line segment 1222 may be in a parallel relationship. The first line segments 1212 may be electrically connected to the second line segments 1222 in a one-to-one correspondence through the second coil 13. In other words, the plurality of first sub-coils 12a may be electrically connected to the plurality of second sub-coils 13a through the vias 14, to implement an electrical connection between internal wires of the entire charging coil module 1.

It should be noted that there are a plurality of implementations for disposing the first accommodating space 123 in the charging coil module 1. Specific descriptions are provided below with reference to the accompanying drawings. Details are not described herein again.

In another implementation, the first coil 12 may alternatively not include the first accommodating space 123. In this case, the plurality of first sub-coils 12a of the first coil 12 may be formed by encircling one or more wires. For example, when the first sub-coils 12a are formed by encircling one wire, two adjacent first sub-coils 12a may be connected head to tail. In this case, the first sub-coils 12a of the first coil 12 may be electrically connected in series.

In some implementations, refer to FIG. 6 and FIG. 7. With reference to FIG. 4, the first coil 12 may further include a first lead 125. One end of the first lead 125 may be electrically connected to an outermost first sub-coil 12a of the first coil 12. The other end of the first lead 125 may be electrically connected to the second lead 132. In this way, the charging coil module 1 may be electrically connected to another electrical structure (for example, a structure like a spring plate) in the electronic device 100 through the first lead 125 and the second lead 132.

It may be understood that narrow-spacing arrangement can be implemented in both the first coil 12 and the second coil 13 in the charging coil module 1, in other words, narrow-spacing arrangement can be implemented in the entire charging coil module 1. When sizes are the same, compared with a charging coil module 1 in which narrow-spacing arrangement is not implemented, the charging coil module 1 in this implementation has a higher metal (for example, copper) content per unit area, so that a charging loss is effectively reduced. This helps prolong duration for maintaining a peak value of 50 W in a charging process of the charging coil module 1, and improves charging efficiency.

In addition, when outer diameters of the charging coil modules 1 are the same, compared with the charging coil module 1 in which narrow-spacing arrangement is not implemented, in the charging coil module 1 in this implementation, a width of the first gap 124 of the first coil 12 and a width of the second gap 131 of the second coil 13 can be reduced without reducing volumes of wires in the first coil 12 and the second coil 13, so that a thickness of the first coil 12 and/or a thickness of the second coil 13 are/is reduced, to reduce an overall thickness of the charging coil module 1. In other words, in the charging coil module 1 in this implementation, the distance between two adjacent turns of the first coil 12 is reduced, so that the charging coil module 1 is miniaturized.

As shown in FIG. 8, the first cover film 40 may be disposed on a side that is of the first coil 12 and that is away from the base material 11. A surface of the side that is of the first coil 12 and that is away from the base material 11 may include a surface that is of the first part 121 and that is away from the base material 11, a surface that is of the second part 122 and that is away from the base material 11, and the bottom wall 1231 and the side wall 1232 that are of the first accommodating space 123. The second cover film 50 may be disposed on a side that is of the second coil 13 and that is away from the base material 11. A part of the first nanocrystalline layer 20 may be disposed on a side that is of the first cover film 40 and that is away from the first coil 12. Another part of the first nanocrystalline layer 20 may be disposed in the first accommodating space 123, and is connected to the bottom wall 1231 and the side wall 1232 that are of the first accommodating space 123. The first graphite layer 30 may be disposed on a side that is of the first nanocrystalline layer 20 and that is away from the first coil 12. In this case, the first nanocrystalline layer 20 and the first graphite layer 30 are sequentially stacked on the first cover film 40.

For example, a part of the first nanocrystalline layer 20 may be recessed in a direction towards the first accommodating space 123 of the first coil 12, and form a first recessed region 21. In other words, the first recessed region 21 forms an opening on a surface that is of the first nanocrystalline layer 20 and that is away from the first cover film 40. In this case, a part of the first graphite layer 30 may be connected to a surface that is of the first nanocrystalline layer 20 and that is away from the first coil 12. Another part of the first graphite layer 30 may be disposed in the first recessed region 21 of the first nanocrystalline layer 20. In this case, a cross-sectional shape of the first graphite layer 30 is roughly a "convex" shape. In another implementation, the first nanocrystalline layer 20 may alternatively not form the first recessed region 21. In this case, the first graphite layer 30 is connected to only the surface that is of the first nanocrystalline layer 20 and that is away from the first cover film 40. It should be noted that there are a plurality of implementations for disposing the first nanocrystalline layer 20 and the first graphite layer 30 in the charging coil module 1. Specific descriptions are provided below with reference to the accompanying drawings. Details are not described herein again.

When volumes of the first nanocrystalline layer 20 and the first graphite layer 30 in the charging coil module 1 remain unchanged, compared with the charging coil module 1 in which the first accommodating space 123 is not disposed in the first coil 12, in the charging coil module 1 in this implementation, the first accommodating space 123 may be filled with a part of the first nanocrystalline layer 20, and a part of the first graphite layer 30 may be filled in the first recessed region 21 of the first nanocrystalline layer 20, to reduce a thickness of the first nanocrystalline layer 20 and/or a thickness of the first graphite layer 30, so that the overall thickness of the charging coil module 1 is reduced. This facilitates miniaturization of the charging coil module 1.

When the thicknesses of the first nanocrystalline layer 20 and the first graphite layer 30 in the charging coil module 1 remain unchanged, compared with the charging coil module 1 in which the first accommodating space 123 is not disposed in the first coil 12, in the charging coil module 1 in this implementation, space of the first accommodating space 123 may be filled with more nanocrystalline, to increase a volume of the first nanocrystalline layer 20. This reduces a magnetic loss of the charging coil module 1, and helps improve fast charging performance of the charging coil module 1. Alternatively, in the charging coil module 1 in this implementation, a part of the first nanocrystalline layer 20 may be filled in the first accommodating space 123, and then more graphite sheets may be filled in the first recessed region 21, to increase the volume of the first graphite layer 30. This improves efficiency of dissipating heat for the charging coil module 1. In other words, in the charging coil module 1 in this implementation, the first accommodating space 123 is disposed in the first coil 12, so that the charging coil module 1 can have more available space (namely, the space of the first accommodating space 123). In this way, regardless of whether a volume of a graphite sheet (namely, the first graphite layer 30) is indirectly increased by disposing the first accommodating space 123 to improve heat dissipation efficiency, or a volume of nanocrystalline (namely, the first nanocrystalline layer 20) is directly increased by disposing the first accommodating space 123 to reduce a magnetic loss, this helps increase charging power of the charging coil module 1 in this implementation.

The foregoing specifically describes a specific structure of the charging coil module 1 in this application. The following specifically describes a preparation process of the charging coil module 1 with reference to the accompanying drawings.

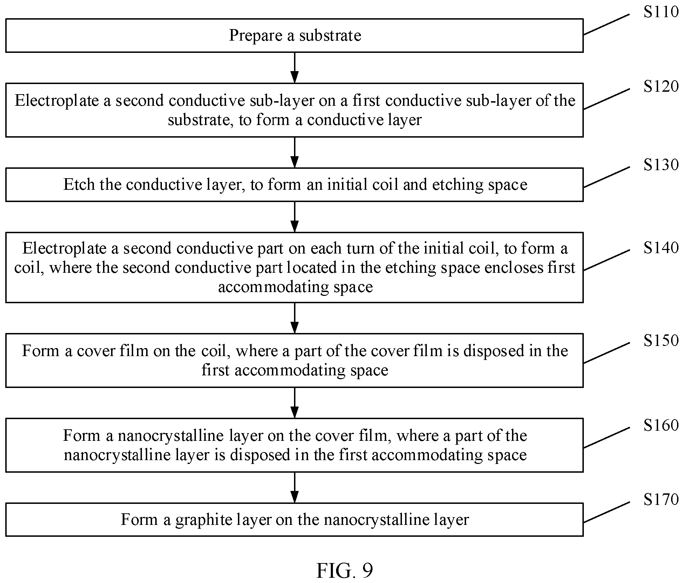

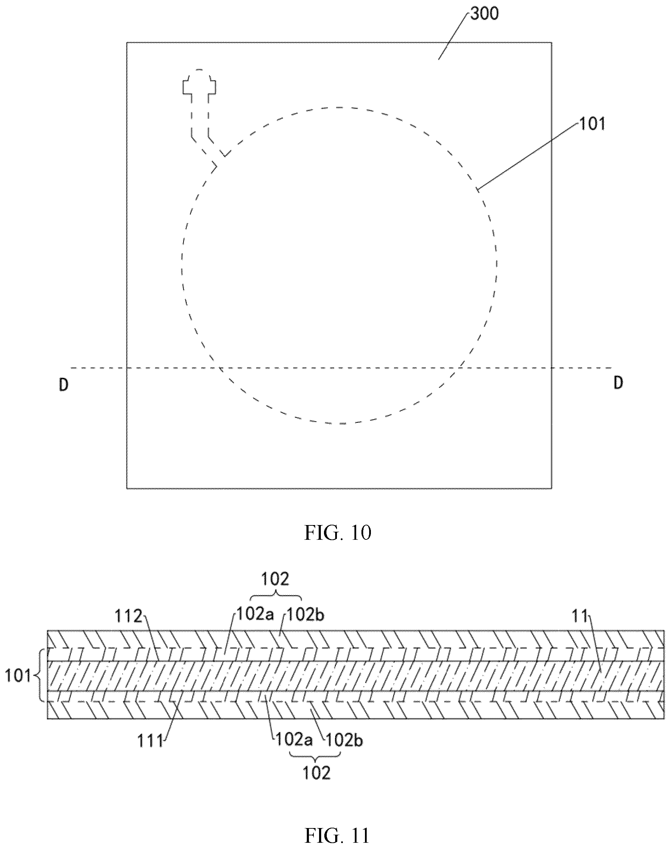

FIG. 9 is a flowchart of preparing the charging coil module 1 shown in FIG. 2. FIG. 10 to FIG. 16 are diagrams of a preparation process of the charging coil module 1 shown in FIG. 2.

FIG. 11 shows a sectional view of the structure shown in FIG. 10 on a line D-D. Preparation in all subsequent steps may be performed based on the structure shown in FIG. 11.

The preparation process of the charging coil module 1 may include steps S110 to S170 shown in FIG. 9.

S110: Prepare a substrate.

For example, as shown in FIG. 10, a circuit board 300 is cut based on a design requirement, to form a substrate 101 (as shown by a dashed line in FIG. 10), namely, a circuit board of the charging coil module 1. An insulation layer of the circuit board 300 may be used to form a base material 11 of the substrate 101. Bottom copper of the circuit board 300 may be used to form a first conductive sub-layer 102a of the substrate 101. The circuit board 300 may be a rigid circuit board, or may be a flexible circuit board, or may be a rigid-flexible circuit board. It should be noted that FIG. 10 shows a cutting path of the circuit board 300 by using a dashed line.

For example, the substrate 101 includes the base material 11 and the first conductive sub-layer 102a disposed on the base material 11. A material of the first conductive sub-layer 102a may be copper. For example, the base material 11 includes a first surface 111 and a second surface 112 that are disposed opposite to each other. A 1" first conductive sub-layer 102a is disposed on the first surface 111. A 2^{nd} first conductive sub-layer 102a is disposed on the second surface 112.

For example, the first conductive sub-layers 102a on the surfaces of the two sides of the base material 11 may be thin. When a thickness of the first conductive sub-layer 102a is less than 30 micrometers, the first conductive sub-layer 102a may be considered as thin. For example, the thickness of the first conductive sub-layer 102a may be 18 micrometers.

In another implementation, after the substrate 101 is formed through cutting, operations such as pre-processing and microetching may be further performed on the substrate 101, to facilitate subsequent preparation. For example, the pre-processing may be removing contaminants from a surface of the first conductive sub-layer 102a by using a brush wheel, to increase surface roughness of the first conductive sub-layer 102a. The microetching may be chemical corrosion, for increasing surface roughness of the first conductive sub-layer 102a.

S 120: Electroplate a second conductive sub-layer on the first conductive sub-layer of the substrate, to form a conductive layer.

For example, as shown in FIG. 11, an electroplating process is used, to electroplate a 1^{st} second conductive sub-layer 102b on the 1^{st} first conductive sub-layer 102a, and electroplate a 2^{nd} second conductive sub-layer 102b on the 2^{nd} first conductive sub-layer 102a. The 1^{st} first conductive sub-layer 102a and the 1^{st} second conductive sub-layer 102b jointly form a 1^{st} conductive layer 102. The 2^{nd} first conductive sub-layer 102a and the 2^{nd} second conductive sub-layer 102b jointly form a 2^{nd} conductive layer 102. In this way, a thickness of the conductive layer 102 of the substrate 101 can be significantly increased. It may be understood that increasing the thickness of the conductive layer 102 of the substrate 101 facilitates an operation in a subsequent process.

For example, a thickness of the 1^{st} conductive layer 102 ranges from 10 micrometers to 60 micrometers. In this case, the conductive layer 102 is thin. For example, the thickness of the 1^{st} conductive layer 102 may be 10 micrometers, 20 micrometers, 25 micrometers, 30 micrometers, or 35 micrometers.

S130: Etch the conductive layer, to form an initial coil and etching space.

For example, the 1^{st} conductive layer 102 of the substrate 101 is etched, to form a first initial coil 103 and etching space 1033, and the 2^{nd} conductive layer 102 of the substrate 101 is etched, to form a second initial coil 104.

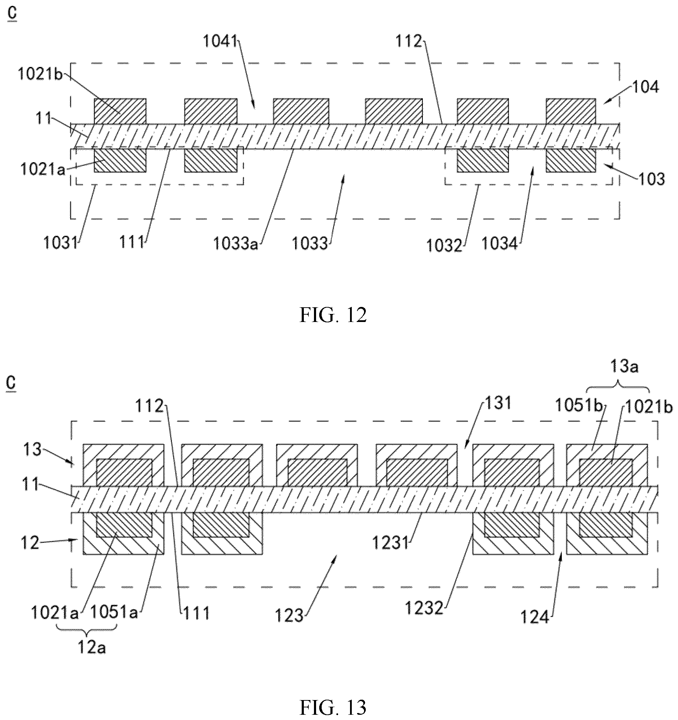

For example, refer to FIG. 11 and FIG. 12. FIG. 12 is a diagram of a preparation process of a partial structure at C shown in FIG. 8. The 1^{st} conductive layer 102 is etched by using a photolithography process, to form a plurality of first conductive parts 1021a that are spaced from each other and that are located on the first surface 111. The plurality of first conductive parts 1021a located on the first surface 111 jointly form the first initial coil 103. One first conductive part 1021a forms one turn of the first initial coil 103. A third gap 1034 of the first initial coil 103 is formed between two adjacent first conductive parts 1021a located on the first surface 111. A spacing between two adjacent first conductive parts 1021a located on the first surface 111 may be a minimum width of the third gap 1034.

For example, the etching space 1033 of the first initial coil 103 may divide the first initial coil 103 into a first part 1031 and a second part 1032. For example, the etching space 1033 may be located between the first part 1031 and the second part 1032 of the first initial coil 103. In other words, the first part 1031 of the first initial coil 103 and the second part 1032 of the first initial coil 103 may be located on two sides of the etching space 1033. In another implementation, the first initial coil 103 may alternatively not include the second part 1032. In this case, the first part 1031 of the first initial coil 103 and the etching space 1033 may be disposed side by side. In another implementation, the etching space 1033 may not be formed when the first initial coil 103 is formed.

For example, the etching space 1033 of the first initial coil 103 may expose a part of the first surface 111 of the base material 11. The part of the first surface 111 exposed inside the etching space 1033 forms a bottom wall 1033a of the etching space 1033.

As shown in FIG. 11 and FIG. 12, the 2^{nd} conductive layer 102 is etched by using the photolithography process, to form a plurality of first conductive parts 1021b that are spaced from each other and that are located on the second surface 112. The plurality of first conductive parts 1021b located on the second surface 112 jointly form the second initial coil 104. One first conductive part 1021b forms one turn of the second initial coil 104. A fourth gap 1041 is formed between two adjacent first conductive parts 1021b located on the second surface 112. A spacing between two adjacent first conductive parts 1021b located on the second surface 112 may be a minimum width of the fourth gap 1041. For example, the first conductive part 1021b located on the second surface 112 may be formed by encircling one or more wires.

For example, a plurality of third gaps 1034 of the first initial coil 103 and a plurality of fourth gaps 1041 of the second initial coil 104 may be disposed in a one-to-one correspondence. A width of the third gap 1034 may be equal to a width of the fourth gap 1041.

For example, after a thin 1^{st} conductive layer 102 is etched, the width of the formed third gap 1034 of the first initial coil 103 may range from 60 micrometers to 100 micrometers. In this case, the width of the third gap 1034 of the first initial coil 103 obtained through etching is small. For example, the width of the third gap 1034 may be 80 micrometers.

For example, after a thin 2^{nd} conductive layer 102 is etched, the width of the formed fourth gap 1041 of the second initial coil 104 may range from 60 micrometers to 100 micrometers. In this case, the width of the fourth gap 1041 of the second initial coil 104 obtained through etching is small. For example, the width of the fourth gap 1041 may be 80 micrometers.

It may be understood that when the 1^{st} conductive layer 102 and the 2^{nd} conductive layer 102 are etched to form the third gap 1034 of the first initial coil 103 and the fourth gap 1041 of the second initial coil 104, a larger thickness of metal that needs to be etched indicates a larger amount of lateral etching generated in the etching process and a larger width of a finally formed gap (namely, the third gap 1034 of the first initial coil 103 and the fourth gap 1041 of the second initial coil 104). In this implementation, a thin conductive layer 102 is etched, to effectively reduce generation of lateral etching, reduce a width of a formed gap, and help control etching quality of the first initial coil 103, the second initial coil 104, and the etching space 1033. In addition, thinner to-be-etched metal indicates shorter time required for etching. This helps improve production efficiency.

In another implementation, a thick 1^{st} conductive layer 102 may alternatively be etched. A width of a third gap 1034 formed through etching may range from 100 micrometers to 130 micrometers. For example, the width of the third gap 1034 may be 120 micrometers.

S140: Electroplate a second conductive part on each turn of the initial coil, to form a coil. The second conductive part located in the etching space encloses first accommodating space. A distance between two adjacent turns of the coil is a wire spacing of the coil.

For example, a second conductive part 1051a is electroplated on each turn (namely, the first conductive part 1021a) of the first initial coil 103, to form the first coil 12. A second conductive part 1051b is electroplated on each turn (namely, the first conductive part 1021b) of the second initial coil 104, to form the second coil 13. For example, both electroplating performed on the first initial coil 103 and electroplating performed on the second initial coil 104 may be lead electroplating. For example, as shown in FIG. 12 and FIG. 13, the first coil 12 includes a plurality of first sub-coils 12a that are encircled and spaced from each other. A first gap 124 is formed between two adjacent first sub-coils 12a. A width of the first gap 124 is less than the width of the third gap 1034.

For example, the first initial coil 103 is electroplated, to form a plurality of second conductive parts 1051a that are spaced from each other and that are located on the first surface 111. In this case, a first conductive part 1021a and a second conductive part 1051a of the first initial coil 103 form a first sub-coil 12a. The plurality of first sub-coils 12a jointly form the first coil 12. Space enclosed by an inner side surface of the first coil 12 and the bottom wall 1033a of the etching space 1033 forms the first accommodating space 123 of the first coil 12. In other words, the second conductive part 1051a located in the etching space 1033 encloses the first accommodating space 123. In this case, a part of the bottom wall 1033a of the etching space 1033 forms a bottom wall 1231 of the first accommodating space 123. The inner side surface of the first coil 12 forms the side wall 1232 of the first accommodating space 123. A part of space of the third gap 1034 of the first initial coil 103 is filled with a second conductive layer 105a of the first coil 12. Space remained after the third gap 1034 of the first initial coil 103 is filled forms the first gap 124 of the first coil 12.

For example, the second conductive part 1051a of the first sub-coil 12a may cover the first conductive part 1021a and be connected to the first surface 111.

For example, as shown in FIG. 12 and FIG. 13, the second coil 13 includes a plurality of second sub-coils 13a that are encircled and spaced from each other. A second gap 131 is formed between two adjacent second sub-coils 13a. A width of the second gap 131 is less than the width of the fourth gap 1041.

For example, the second initial coil 104 is electroplated, to form a plurality of second conductive parts 1051b that are spaced from each other and that are located on the second surface 112. In this case, a first conductive part 1021b and a second conductive part 1051b of the second initial coil 104 jointly form a second sub-coil 13a. The plurality of second sub-coils 13a jointly form the second coil 13. A part of space of the fourth gap 1041 of the second initial coil 104 is filled with a second conductive layer 105b of the second coil 13. Space remained after the fourth gap 1041 of the second initial coil 104 is filled forms the second gap 131 of the second coil 13.

For example, the second conductive part 1051b of the second sub-coil 13a may cover the first conductive part 1021b and be connected to the second surface 112.

In some implementations, both a thickness of the first coil 12 and a thickness of the second coil 13 may be greater than 50 micrometers. For example, the thickness of the first coil 12 may be equal to the thickness of the second coil 13. Both the thickness of the first coil 12 and the thickness of the second coil 13 may be 55 micrometers. In this case, a depth of the first accommodating space 123 may be 55 micrometers.

It should be noted that electroplating performed on the first initial coil 103 and electroplating performed on the second initial coil 104 may be performed simultaneously or separately.

S150: Form a cover film on the coil. A part of the cover film is disposed in the first accommodating space.

For example, a first cover film 40 is formed on a surface of the first coil 12, and a second cover film 50 is formed on a surface of the second coil 13. A part of the first cover film 40 is disposed in the first accommodating space 123.

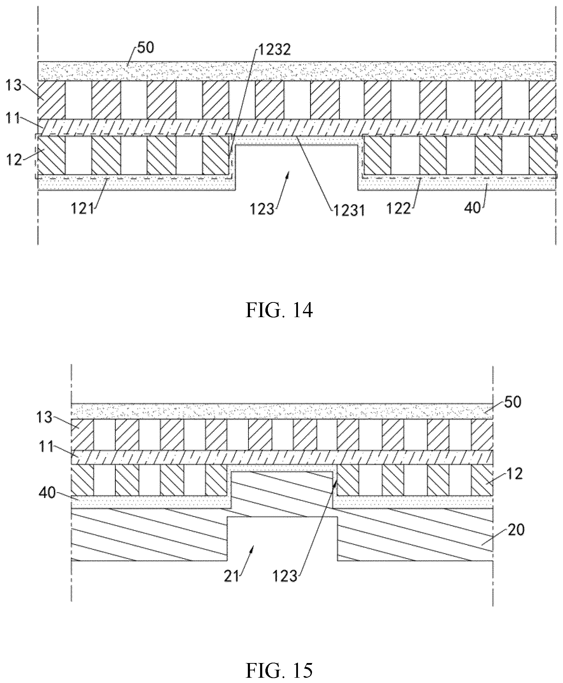

As shown in FIG. 14, the first cover film 40 is formed on the surface of the first coil 12. The first cover film 40 may be connected to a surface that is of a first part 121 of the first coil 12 and that is away from the base material 11, a surface that is of a second part 122 of the first coil 12 and that is away from the base material 11, and the bottom wall 1231 and the side wall 1232 that are of the first accommodating space 123. The second cover film 50 is formed on the surface of the second coil 13. The second cover film 50 may be connected to a surface that is of the second coil 13 and that is away from the base material 11.

For example, both a material of the first cover film 40 and a material of the second cover film 50 may be insulation materials. The first cover film 40 may include a structure of two layers: a first layer and a second layer (not shown in the figure). The first layer may be connected to a surface that is of the first coil 12 and that is away from the base material 11. The second layer may be connected to a surface that is of the first layer and that is away from the first coil 12. For example, a material of the first layer may be an adhesive (adhesive, AD). A material of the second layer may be polyimide (Polyimide, PI). It may be understood that a specific structure of the second cover film 50 is roughly the same as a structure of the first cover film 40. Details are not described herein again. For example, a color of the first cover film 40 and/or a color of the second cover film 50 may be black.

S160: Form a nanocrystalline layer on the cover film. Apart of the nanocrystalline layer is disposed in the first accommodating space. The nanocrystalline layer is connected to a surface that is of the cover film and that is away from the coil.

For example, the first nanocrystalline layer 20 is formed on a surface of the first cover film 40. A part of the first nanocrystalline layer 20 fills the first accommodating space 123. In addition, the first nanocrystalline layer 20 has a first recessed region 21, and the first recessed region 21 forms an opening on a surface that is of the first nanocrystalline layer 20 and that is away from the first cover film 40.

As shown in FIG. 15, the first nanocrystalline layer 20 may be bonded, by using an adhesive layer, to a surface that is of the first cover film 40 and that is away from the base material 11. A part of the first nanocrystalline layer 20 may fill the first accommodating space 123 of the first coil 12.

For example, the first nanocrystalline layer 20 may be further recessed in a direction towards the first accommodating space 123 of the first coil 12, and form the first recessed region 21. In other words, the first recessed region 21 forms the opening on the surface that is of the first nanocrystalline layer 20 and that is away from the first cover film 40. A depth of the first recessed region 21 of the first nanocrystalline layer 20 may be roughly the same as the depth of the first accommodating space 123 of the first coil 12.

For example, the adhesive layer may be a double-sided adhesive.

S170: Form a graphite layer on the nanocrystalline layer. The graphite layer is connected to a surface that is of the nanocrystalline layer and that is away from the cover film.

For example, the first graphite layer 30 is formed on a surface of the first nanocrystalline layer 20. The first graphite layer 30 fills the first recessed region 21.

As shown in FIG. 8, the first graphite layer 30 may be connected, through adhesive press-fitting, to the surface that is of the first nanocrystalline layer 20 and that is away from the first cover film 40. A part of the first graphite layer 30 may fill the first recessed region 21 of the first nanocrystalline layer 20.

For example, for ease of description, an arrangement direction of the first part 121, the first accommodating space 123, and the second part 122 of the first coil 12 in the charging coil module 1 is defined as an X-axis direction, a thickness direction of the charging coil module 1 is defined as a Y-axis direction, and a coordinate axis is established. In the X-axis direction, a region in which the first part 121 of the first coil 12 is located is an X1 region. A region in which the first accommodating space 123 of the first coil 12 is located is an X2 region. A region in which the second part 122 of the first coil 12 is located is an X3 region. Thicknesses, in different regions, of structures of various parts of the charging coil module 1 prepared by using the foregoing preparation method may be shown in the following Table 1.

**Table 1**

| Structure | Material | Thickness (micrometer) | | |
|---|---|---|---|---|
| | | X1 | X2 | X3 |
| Second cover film | PI | 7.5 | 7.5 | 7.5 |
| | AD | 5 | 5 | 5 |
| Second coil | Plated copper | 55 | 55 | 55 |
| | Copper | | | |
| Base material | PI | 12.5 | 12.5 | 12.5 |
| First coil | Copper | 55 | | 55 |
| | Plated copper | | | |
| First cover film | AD | 5 | 5 | 5 |
| | PI | 7.5 | 7.5 | 7.5 |
| First nanocrystalline layer | Nanocrystalline | 59 | 59 | 59 |
| First graphite layer | Graphite sheet | 50 | 100 | 50 |

The first accommodating space 123 is disposed in the first coil 12 of the charging coil module 1 prepared by using the preparation method in this implementation, and narrow-spacing arrangement may be implemented in the entire charging coil module 1.

It should be noted that before the charging coil module 1 is prepared by using the preparation method in this implementation, target parameters such as a structure and a material of the charging coil module 1 may be first input into electrical simulation software, and an electromagnetic field is added to perform monomer simulation, to obtain a simulated direct current impedance of the charging coil module 1. Then, a wire spacing of the first coil 12, a wire spacing of the second coil 13, a thickness of the first nanocrystalline layer 20, a thickness of the first graphite layer 30, and a size of the first accommodating space 123 in the charging coil module 1 are adjusted based on the obtained simulation value, so that the charging coil module 1 obtained through adjustment can meet a design requirement. The simulated direct current impedance of the charging coil module 1 in this implementation may be 98.7 mΩ. A direct current impedance of the charging coil module 1 that meets a design requirement of 3.49 µH inductance and 50 W power is less than or equal to 100 mΩ. In other words, the charging coil module 1 prepared by using the preparation method in this application can meet a general design requirement.

It may be understood that, in the preparation method for the charging coil module 1 in this implementation, a wide third gap 1034 of the first initial coil 103 and a wide fourth gap 1041 of the second initial coil 104 are obtained through etching based on the conductive layer 102 obtained through first-time electroplating. Then, through second-time electroplating, the second conductive part 1051a is formed on the first conductive part 1021a of the first coil 12, and the second conductive part 1051b is formed on the first conductive part 1021b of the second coil 13. Therefore, the width of the third gap 1034 and the width of the fourth gap 1041 are reduced. In this way, the first gap 124 of the first coil 12 and the second gap 131 of the second coil 13 that are narrow in width can be obtained. Compared with a solution of a charging coil module in which a thick metal layer is formed through only one time of electroplating, and then a wire is directly obtained through etching, in the charging coil module 1 in this implementation, after electroplating is performed for a first time, a wire with a wide wire spacing is obtained through etching, and then electroplating is performed for a second time. Therefore, the wire spacing is significantly reduced, to obtain the charging coil module 1 in which narrow-spacing arrangement is implemented.

In other words, in the preparation method for the charging coil module 1 in this implementation, the wire spacing of the charging coil module 1 obtained through two times of electroplating is narrow, and narrow-spacing arrangement is implemented in the charging coil module 1. When outer diameters of charging coil modules 1 are the same, compared with a charging coil module 1 in which narrow-spacing arrangement is not implemented, in the charging coil module 1 in this implementation, the width of the first gap 124 of the first coil 12 and the width of the second gap 131 of the second coil 13 can be reduced without reducing volumes of wires in the first coil 12 and the second coil 13, so that the thickness of the first coil 12 and/or the thickness of the second coil 13 are/is reduced, to reduce an overall thickness of the charging coil module 1. This facilitates miniaturization of the charging coil module 1.

In addition, when sizes of the charging coil modules 1 are the same, compared with the charging coil module 1 in which narrow-spacing arrangement is not implemented, the charging coil module 1 in this implementation has a higher metal (for example, copper) content per unit area, and a volume of a wire in the charging coil module 1 may be larger, so that a charging loss can be reduced. This helps prolong duration for maintaining a peak value of 50 W in a charging process of the charging coil module 1, and improves charging efficiency.

In addition, the first accommodating space 123 is disposed in the first coil 12 of the charging coil module 1 in this application, and narrow-spacing arrangement is implemented in the entire charging coil module 1. When outer diameters of charging coil modules 1 are the same, compared with a conventional charging coil module in which neither the first accommodating space 123 is disposed nor narrow-spacing arrangement is implemented, in the charging coil module 1 in this application, a direct current resistance (Remote Differential Compression, RDC) may be the same as a direct current resistance of the conventional charging coil module, power may be the same as that of the conventional charging coil module, but an overall thickness may be less than that of the conventional charging coil module. In other words, the charging coil module 1 in this application can reduce the overall thickness of the charging coil module 1 while meeting a power requirement of the conventional charging coil module, thereby implementing miniaturization of the charging coil module 1. A thickness of the charging coil module 1 may be reduced by about 20 micrometers to 70 micrometers. In this way, when the charging coil module 1 in this application is used in an electronic device 100, for example, a mobile phone, with limited internal space, the overall thickness of the charging coil module 1 may be reduced, to better meet a thinning requirement of the electronic device 100.

In addition, compared with the conventional charging coil module 1 in which neither the first accommodating space 123 is disposed nor narrow-spacing arrangement is implemented, in the charging coil module 1 in this implementation, an impedance may be reduced by about 17%. When power (for example, 50 W) of the charging coil module 1 is the same as power of the conventional charging coil module, a charging loss of the charging coil module 1 in this implementation is smaller, and duration for maintaining a peak value of 50 W in a charging process increases.

In some implementations, automated optical inspection (Automated Optical Inspection, AOI) may be further performed between step S120 and step S130, and between step S130 and step S140, to reduce product defects, thereby improving a product yield.

In some implementations, the charging coil module 1 provided with the first cover film 40 and the second cover film 50 may be further processed between step S150 and step S160. For example, operations such as press-fitting, adhesive scrap removal, sandblasting, immersion gold, hot water washing, spray printing silkscreen, baking silkscreen, electrical measurement, cutting, and warehousing detection may be further sequentially performed on the charging coil module 1 covered with the first cover film 40 and the second cover film 50.

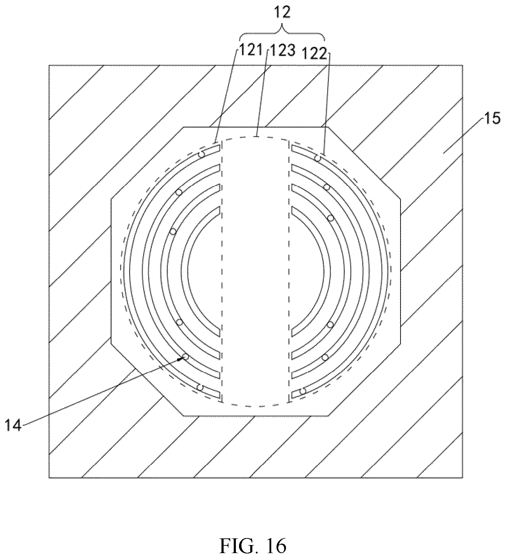

In some implementations, in a process of preparing the charging coil module 1, a copper sheet 15 (as shown in FIG. 16) may be further disposed around the first conductive sub-layer 102a. The copper sheet 15 is spaced from the first conductive sub-layer. In this way, a current can be uniform through the copper sheet 15 in subsequent electroplating. Compared with a charging coil module 1 in which no copper sheet 15 is disposed around the first conductive sub-layer 102a, in the charging coil module 1 in this implementation, an electroplated area can be increased by disposing the copper sheet 15, so that the current is uniform, and current densities at positions at which the first coil 12, the second coil 13, and the first accommodating space 123 are formed are reduced, so that electroplating is more uniform, thereby helping improve a product yield. It should be noted that the copper sheet 15 is used only in the preparation process of the charging coil module 1. The copper sheet 15 is not included inside the prepared charging coil module 1.

In some implementations, an electroplating parameter in step S140 may be further adjusted to change an electroplating speed and optimize an electroplating lead. The electroplating parameter may be a current density or electroplating time. For example, a current density of the first initial coil 103 and a current density of the second initial coil 104 may be set differently. For example, the electroplating density of the first initial coil 103 may be 2.3 ADS, and the electroplating density of the second initial coil 104 may be 2.5 ADS. ADS is a unit of the current density, namely, ampere per square decimetre. In this case, the current density of the second initial coil 104 is lower than the current density of the first initial coil 103. In this way, the current density of the first initial coil 103 is lowered, so that the thickness of the first coil 12 obtained through electroplating is more uniform. This helps improve a product yield.

It may be understood that, in the charging coil module 1 in this implementation, electroplating parameters of the first initial coil 103 and the second initial coil 104 during the second-time electroplating are adjusted, to reduce electroplating rates of the first initial coil 103 and the second initial coil 104 during the second-time electroplating, so that electroplating is more uniform, and the thickness of the formed first coil 12 and the thickness of the formed second coil 13 are more uniform. This helps improve a product yield.

As shown in FIG. 11, in some implementations, in step S120, the thick first conductive sub-layer 102a of the substrate 101 may be electroplated. When the thickness of the first conductive sub-layer 102a is greater than 30 micrometers, the first conductive sub-layer 102a is thick. For example, the thickness of the first conductive sub-layer 102a may be 50 micrometers. After the first conductive sub-layer 102a is electroplated, the thickness of the formed conductive layer 102 may range from 50 micrometers to 60 micrometers. In this case, the conductive layer 102 is thick. For example, the thickness of the conductive layer 102 may be 55 micrometers. In this case, the second conductive sub-layer 102b formed through electroplating may be thin. It should be noted that when the first conductive sub-layer 102a is thick, the thickness of the first conductive sub-layer 102a cannot exceed the thickness of the finally formed first coil 12.

It may be understood that when the second conductive sub-layer 102b is formed through electroplating, a thickness tolerance generated in a preparation process of a second conductive sub-layer 102b with a thickness of 20 micrometers is approximately ±5 micrometers each time the second conductive sub-layer 102b with a thickness of 20 micrometers is formed. Compared with a case in which the thick conductive layer 102 is prepared by using the thin first conductive sub-layer 102a of the substrate 101, when the thick first conductive sub-layer 102a of the substrate 101 is directly used for preparation, the thickness of the second conductive sub-layer 102b formed in the electroplating process may be reduced, so that the thickness tolerance of the second conductive sub-layer 102b is controlled within a small range (for example, ±5 micrometers), so that the thickness of the formed conductive layer 102 of the first coil 12 is more uniform. In addition, the thickness of the second conductive sub-layer 102b formed through electroplating needs to be reduced. This helps reduce electroplating costs.

As shown in FIG. 11 and FIG. 13, in some implementations, when electroplating is performed on the first conductive sub-layer 102a of the substrate 101 in step S120, the thickness of the formed second conductive sub-layer 102b may be appropriately increased. In this case, the thickness of the conductive layer 102 is increased accordingly. For example, after the thin first conductive sub-layer 102a of the substrate 101 is electroplated, the thickness of the formed conductive layer 102 may range from 35 micrometers to 45 micrometers. In this case, the second conductive sub-layer 102b is thick. In this way, the thickness of the second conductive sub-layer 102b is increased, to increase the thickness of the conductive layer 102, so that thicknesses of the second conductive part 1051a of the first coil 12 and the second conductive part 1051b of the second coil 13 that need to be formed through second-time electroplating can be reduced.

It may be understood that, when the second conductive part 1051a of the first coil 12 is formed through second-time electroplating, a thickness tolerance generated in a preparation process of metal with a thickness of 20 micrometers is approximately ±8 micrometers each time the metal with a thickness of 20 micrometers is formed. In this implementation, the thick conductive layer 102 is directly electroplated for the second time, so that a thickness error generated during the second-time electroplating can be effectively reduced, and the thickness of the formed second conductive part 1051a of the first coil 12 is more uniform.

In some implementations, in step S150, another electrical element may be further disposed in the charging coil module 1 by using a surface mounted technology (Surface Mounted Technology, SMT). Before a reflow soldering step of the surface mounted technology, when surface mounting is performed on the substrate 101 of the charging coil module 1, the substrate 101 may be clamped by using a magnetic fixture, to share heat. In this way, a risk of blistering when the first cover film 40 and the second cover film 50 are formed can be reduced, and a product yield can be improved.

In some implementations, between step S150 and step S160, when the charging coil module 1 covered with the first cover film 40 and the second cover film 50 is washed, any end of the substrate 101 may be placed on a guide plate to pass through a cleaning section. In this way, the guide plate is disposed to support the substrate 101 and guide the substrate 101 to be transferred, so that a risk of a wrinkle or a crease generated in a washing process can be effectively reduced, and a product yield can be improved.

It should be noted that the foregoing describes only some implementations in which the first accommodating space 123 of the first coil 12 in the charging coil module 1 is completely hollow-out. A position of the first accommodating space 123 and disposition of the first nanocrystalline layer 20 and the first graphite layer 30 are not limited to the foregoing structure. The following specifically describes a structure of the first accommodating space 123 in another implementation with reference to the accompanying drawings.

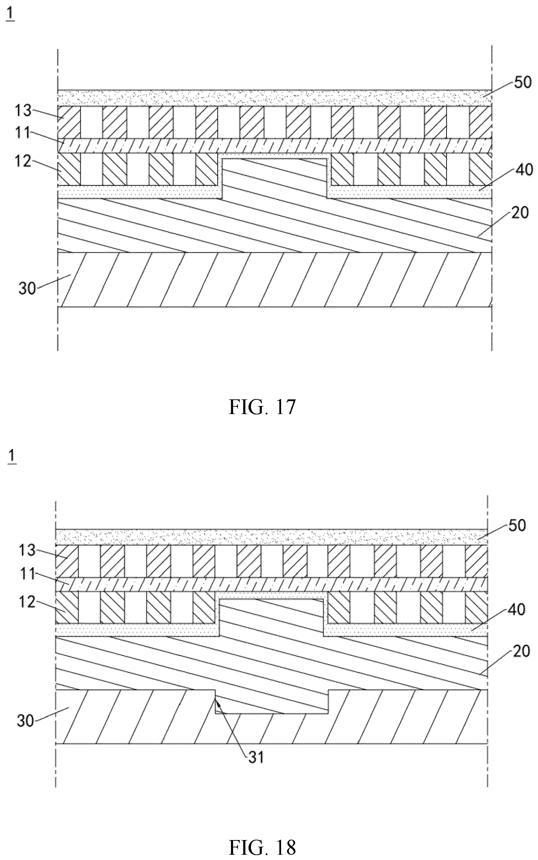

FIG. 17 is a partial sectional view of the charging coil module 1 shown in FIG. 8 in another implementation. FIG. 18 is a partial sectional view of the charging coil module 1 shown in FIG. 8 in another implementation.

As shown in FIG. 17, the structure of the charging coil module 1 in this implementation is roughly the same as that of the charging coil module 1 shown in FIG. 4. Same details are not described again. A difference lies in that the first nanocrystalline layer 20 may not be recessed towards the first accommodating space 123 of the first coil 12, in other words, the first nanocrystalline layer 20 may not include the first recessed region 21. In this case, a cross-sectional shape of the first nanocrystalline layer 20 is roughly a "convex" shape.

When volumes of the first nanocrystalline layer 20 and the first graphite layer 30 in the charging coil module 1 remain unchanged, compared with the charging coil module 1 in which the first accommodating space 123 is not disposed in the first coil 12, in the charging coil module 1 in this implementation, space of the first accommodating space 123 may be filled with a part of the first nanocrystalline layer 20, to reduce a thickness of the first nanocrystalline layer 20, so that an overall thickness of the charging coil module 1 is reduced. This facilitates miniaturization of the charging coil module 1.

When the thicknesses of the first nanocrystalline layer 20 and the first graphite layer 30 in the charging coil module 1 remain unchanged, compared with the charging coil module 1 in which the first accommodating space 123 is not disposed in the first coil 12, in the charging coil module 1 in this implementation, the space of the first accommodating space 123 may be filled with more nanocrystalline. In other words, a volume the first nanocrystalline layer 20 in this implementation is larger. This helps reduce a magnetic loss and increase charging power of the charging coil module 1. In another implementation, the first graphite layer 30 may have a second recessed region 31 (as shown in FIG. 18). The second recessed region 31 forms an opening on a surface that is of the first graphite layer 30 and that faces the first nanocrystalline layer 20. A part of the first nanocrystalline layer 20 may be disposed in the second recessed region 31. In this way, the volume of the first nanocrystalline may be larger, and efficiency of reducing a magnetic loss may be higher.

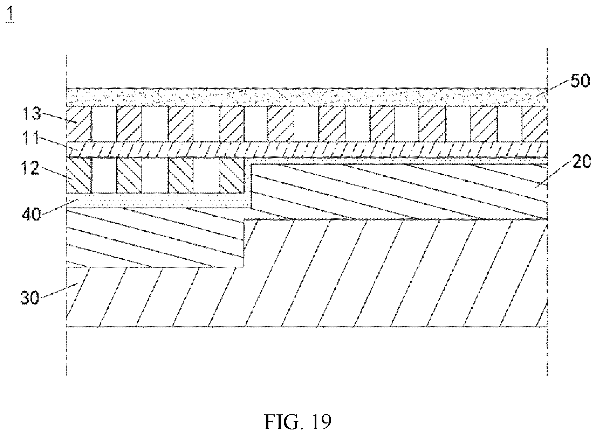

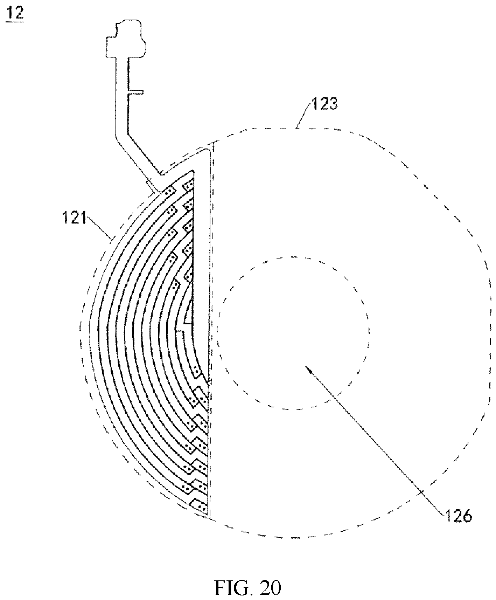

FIG. 19 is a partial sectional view of the charging coil module 1 shown in FIG. 8 in another implementation. FIG. 20 is a diagram of a structure of the first coil 12 of the charging coil module 1 shown in FIG. 19.

As shown in FIG. 19 and FIG. 20, the structure of the charging coil module 1 in this implementation is roughly the same as that of the charging coil module 1 shown in FIG. 8. Same details are not described again. A difference lies in that the first coil 12 may not include the second part 122, and includes only the first part 121 and the first accommodating space 123. In this case, the first part 121 and the first accommodating space 123 may be disposed side by side. It may be understood that a volume of the first accommodating space 123 in this implementation is larger, in other words, available space of the charging coil module 1 is larger, so that in the charging coil module 1, the first accommodating space 123 can be filled with more nanocrystalline and/or graphite sheets, to increase a volume of the first nanocrystalline layer 20 and/or a volume of the first graphite layer 30. This helps increase charging power of the charging coil module 1.

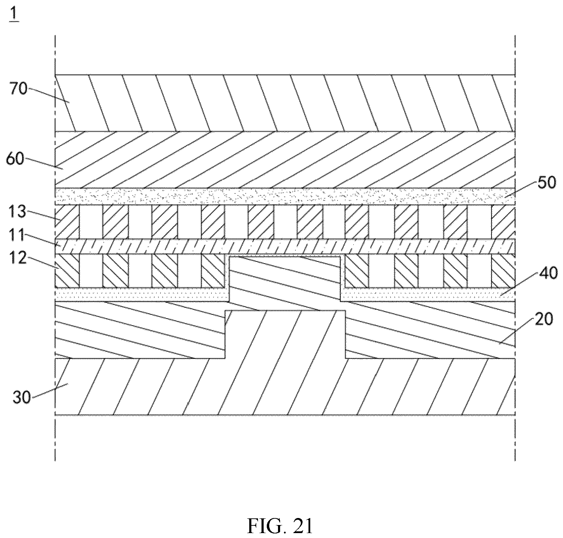

FIG. 21 is a partial sectional view of the charging coil module 1 shown in FIG. 8 in another implementation.

As shown in FIG. 21, the structure of the charging coil module 1 in this implementation is roughly the same as that of the charging coil module 1 shown in FIG. 8. Same details are not described again. A difference lies in that the charging coil module 1 may further include a second nanocrystalline layer 60 and a second graphite layer 70. For example, the second nanocrystalline layer 60 may be bonded, by using an adhesive layer, to a surface that is of the second cover film 50 and that is away from the second coil 13. The second graphite layer 70 may be connected, through adhesive press-fitting, to a surface that is of the second nanocrystalline layer 60 and that is away from the second cover film 50. In this case, the second nanocrystalline layer 60 and the second graphite layer 70 are sequentially stacked on the second cover film 50. In this way, the second nanocrystalline layer 60 and the second graphite layer 70 are disposed, so that volumes of nanocrystalline and graphite in the charging coil module 1 are increased. This effectively increases charging power of the charging coil module 1.

The foregoing describes only specific structures and preparation processes of the charging coil module 1 in some implementations. The following specifically describes a structure and a partial preparation process of the charging coil module 1 in another implementation with reference to the accompanying drawings.

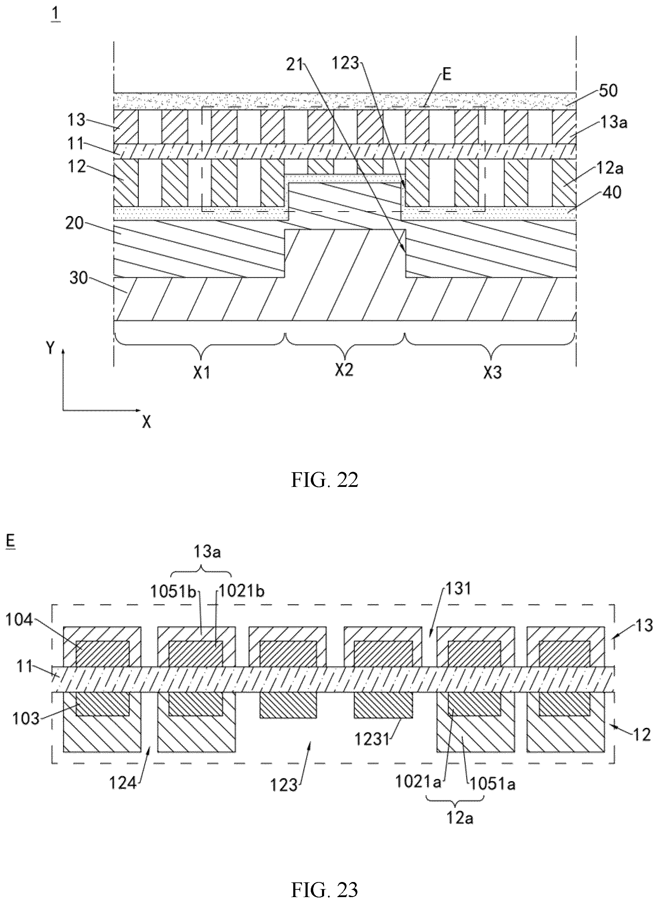

FIG. 22 is a partial sectional view of the charging coil module 1 shown in FIG. 8 in another implementation.

As shown in FIG. 22, the structure of the charging coil module 1 in this implementation is roughly the same as that of the charging coil module 1 shown in FIG. 8. Same details are not described again. A difference lies in that a partial coil structure may be further retained in the first accommodating space 123 of the first coil 12 in this implementation. A thickness of the partial coil structure in the first accommodating space 123 may be less than the thickness of the first part 121 of the first coil 12. In other words, the first accommodating space 123 of the first coil 12 is not completely hollow-out. In this case, the first accommodating space 123 is a groove. A surface of the partial coil structure exposed inside the first accommodating space 123 forms the bottom wall 1231 of the first accommodating space 123.

It may be understood that, compared with the charging coil module 1 in which the first accommodating space 123 of the first coil 12 is completely hollow-out, in the charging coil module 1 in this implementation, the first accommodating space 123 further includes the partial coil structure, in other words, the first accommodating space 123 is not completely hollow-out, so that a volume of a wire in the first coil 12 is increased. Therefore, a metal (for example, copper) content per unit area in the first coil 12 is higher, and charging efficiency of the charging coil module 1 is higher. In addition, cabling of the first coil 12 in this implementation may be designed as series cabling, so that a cabling loss is lower, thereby helping prolong a service life of a product.

FIG. 23 is a diagram of a preparation process of the charging coil module 1 shown in FIG. 22.

The preparation process of the charging coil module 1 in this implementation may include the following step 1 to step 9.

Step 1: Prepare a substrate.

Step 2: Electroplate a second conductive sub-layer at a first conductive sub-layer of the substrate, to form a conductive layer.

It should be noted that step 1 and step 2 in this implementation are roughly the same as step S110 and step S120. For details, refer to FIG. 10 and FIG. 11. Same details are not described again.

Step 3: Etch the conductive layer, to form an initial coil.

Step 4: Cover a part of a surface of the initial coil with a mask.

Step 5: Electroplate a second conductive part on each turn exposed on the initial coil, to form a coil. A distance between two adjacent turns of the coil is a wire spacing of the coil.

Step 6: Remove the mask, to form first accommodating space of the coil.

FIG. 23 shows a preparation process of a partial structure at E shown in FIG. 22. A preparation process of step 4 and step 5 in this implementation is roughly the same as that of step S130 and step S140. A same part is not described again. A difference lies in that the first accommodating space 123 of the first coil 12 in this implementation is not completely hollow-out, and a forming manner of the first accommodating space 123 is different.

For example, when the first initial coil 103 is formed through etching in step 3, the etching space 1033 may not be formed. A surface of a part of a wire of the first initial coil 103 may be covered with the mask (that is, step 4). The mask may cover a part of a wire that is in the middle of the first initial coil 103. Then, the second conductive part 1051a is electroplated on each turn (namely, the first conductive part 1021a) exposed on the first initial coil 103, to form the first coil 12. The second conductive part 1051b is electroplated on each turn (namely, the first conductive part 1021b) of the second initial coil 104, to form the second coil 13 (that is, step 5).

Finally, the mask covering the surface of the first initial coil 103 is removed (that is, step 6). Space enclosed by a surface of a part of the first initial coil 103 that is exposed after the mask is removed and an inner side surface of the first coil 12 is the first accommodating space 123 of the first coil 12. The surface of the part of the first initial coil 103 that is exposed inside the first accommodating space 123 forms the bottom wall 1231 of the first accommodating space 123. In this way, the charging coil module 1 in which the first accommodating space 123 of the first coil 12 is not completely hollow-out may be obtained by performing the foregoing step 230 to step 260.

For example, a depth of the first accommodating space 123 may be 45 micrometers.

Step 7: Form a cover film on the coil. A part of the cover film is connected to a surface that is of the coil and that is away from the substrate, and another part of the cover film is disposed in the first accommodation space. For example, a surface of the first coil 12 is covered with the first cover film 40, and a surface of the second coil 13 is covered with the second cover film 50. A part of the first cover film 40 is disposed in the first accommodating space 123.

Step 8: Form a nanocrystalline layer on the cover film. The nanocrystalline layer is connected to a surface that is of the cover film and that is away from the coil.

For example, the first nanocrystalline layer 20 is formed on a surface of the first cover film 40. A part of the first nanocrystalline layer 20 fills the first accommodating space 123. In addition, the first nanocrystalline layer 20 has a first recessed region 21, and the first recessed region 21 forms an opening on a surface that is of the first nanocrystalline layer 20 and that is away from the first cover film 40.

Step 9: Form a graphite layer on the nanocrystalline layer.

For example, the first graphite layer 30 is formed on a surface of the first nanocrystalline layer 20. The first graphite layer 30 fills the first recessed region 21.

As shown in FIG. 22, step 7 to step 9 in this implementation are roughly the same as step S150 to step S170. A same part is not described again. For specific disposition of the first nanocrystalline layer 20 and the first graphite layer 30, further refer to disposition manners shown in FIG. 17, FIG. 18, and FIG. 19.

Thicknesses, in different regions, of structures of various parts of the charging coil module 1 prepared by using the foregoing preparation method may be shown in the following Table 2.

**Table 2**

| Structure | Material | Thickness (micrometer) | | |
|---|---|---|---|---|
| | | A1 | A2 | A3 |
| Second cover film | PI | 7.5 | 7.5 | 7.5 |
| | AD | 5 | 5 | 5 |
| Second coil | Plated copper | 30 | 30 | 30 |
| | Copper | | | |
| Base material | PI | 12.5 | 12.5 | 12.5 |
| First coil | Copper | 75 | 30 | 75 |
| | Plated copper | | | |
| First cover film | AD | 5 | 5 | 5 |
| | PI | 7.5 | 7.5 | 7.5 |
| First nanocrystalline layer | Nanocrystalline | 59 | 59 | 59 |
| First graphite layer | Graphite sheet | 50 | 100 | 50 |

In some implementations, automated optical inspection may be further performed between step 3 and step 4, and between step 6 and step 7, to reduce product defects, thereby improving a product yield.

In some implementations, the charging coil module 1 covered with the first cover film 40 and the second cover film 50 may be further processed between step 7 and step 8. For example, operations such as press-fitting, adhesive scrap removal, sandblasting, gold electroplating, hot water washing, spray printing silkscreen, baking silkscreen, electrical measurement, cutting, and warehousing detection may be further sequentially performed on the charging coil module 1 covered with the first cover film 40 and the second cover film 50.

It should be noted that the foregoing describes only some implementations in which the first accommodating space 123 that is not completely hollow-out is disposed in the first coil 12 in the charging coil module 1. The following specifically describes a specific structure of the charging coil module 1 in another implementation with reference to the accompanying drawings.

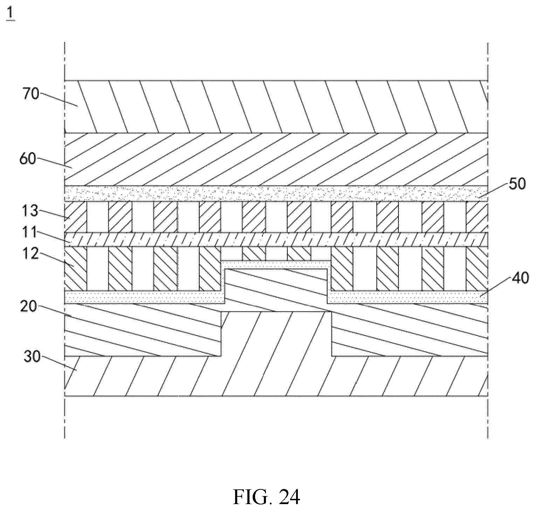

FIG. 24 is a partial sectional view of the charging coil module 1 shown in FIG. 22 in another implementation.

As shown in FIG. 24, the structure of the charging coil module 1 in this implementation is roughly the same as that of the charging coil module 1 shown in FIG. 22. Same details are not described again. A difference lies in that the charging coil module 1 may further include a second nanocrystalline layer 60 and a second graphite layer 70. For example, the second nanocrystalline layer 60 may be bonded, by using an adhesive layer, to a surface that is of the second cover film 50 and that is away from the charging coil module 1. The second graphite layer 70 may be connected, through adhesive press-fitting, to a surface that is of the second nanocrystalline layer 60 and that is away from the second cover film 50. In this way, the second nanocrystalline layer 60 and the second graphite layer 70 are disposed, so that volumes of nanocrystalline and graphite in the charging coil module 1 are increased. This effectively increases charging power of the charging coil module 1.

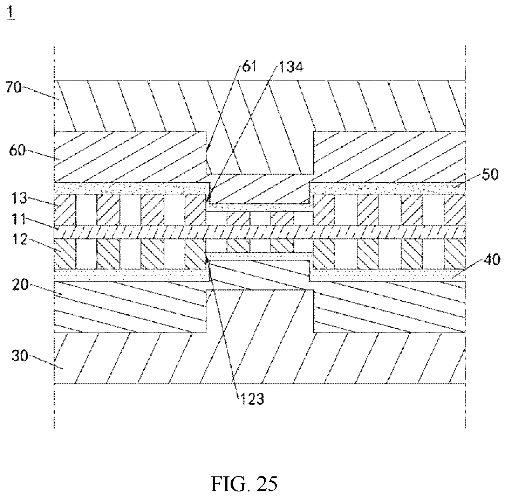

FIG. 25 is a partial sectional view of the charging coil module 1 shown in FIG. 22 in another implementation.

As shown in FIG. 25, the structure of the charging coil module 1 in this implementation is roughly the same as that of the charging coil module 1 shown in FIG. 24. Same details are not described again. A difference lies in that the second coil 13 may have second accommodating space 134. The second accommodating space 134 of the second coil 13 may not be completely hollow-out. In this case, the second accommodating space 134 is a groove. The second sub-coils 13a in the second coil 13 may be electrically connected in series. The second accommodating space 134 of the second coil 13 may communicate with the coil through hole 14 (refer to FIG. 4). In another implementation, the second accommodating space 134 of the second coil 13 may not communicate with the coil through hole 14.

For example, a part of the second nanocrystalline layer 60 may be disposed in the second accommodating space 134 of the second coil 13. The second nanocrystalline layer 60 may be recessed in a direction towards the second accommodating space 134 of the second coil 13, to form a third recessed region 61 of the second nanocrystalline layer 60. In other words, the third recessed region 61 forms an opening on a surface that is of the second nanocrystalline layer 60 and that is away from the second cover film 50. In this case, a part of the second graphite layer 70 may be connected to a surface that is of the second nanocrystalline layer 60 and that is away from the second coil 13. Another part of the second graphite layer 70 may be disposed in the third recessed region 61 of the second nanocrystalline layer 60. A cross-sectional shape of the second graphite layer 70 is roughly a "convex" shape. In another implementation, for specific disposition of the second nanocrystalline layer 60 and the second graphite layer 70, refer to disposition manners of the first nanocrystalline layer 20 and the first graphite layer 30 shown in FIG. 8, FIG. 17, FIG. 18, and FIG. 19.

It may be understood that, when sizes of the charging coil modules 1 are the same, in the charging coil module 1 in this implementation, the first accommodating space 123 of the first coil 12 is disposed in the first coil 12. In addition, the second accommodating space 134 of the second coil 13 is disposed in the second coil 13, so that the charging coil module 1 can have more available space, and more nanocrystalline and/or graphite sheets can be disposed. This helps improve charging efficiency of the charging coil module 1.

In some implementations, the first accommodating space 123 of the first coil 12 and the second accommodating space 134 of the second coil 13 may be symmetrically disposed relative to the base material 11. In another implementation, the first accommodating space 123 of the first coil 12 and the second accommodating space 134 of the second coil 13 may alternatively be staggered relative to the base material 11.

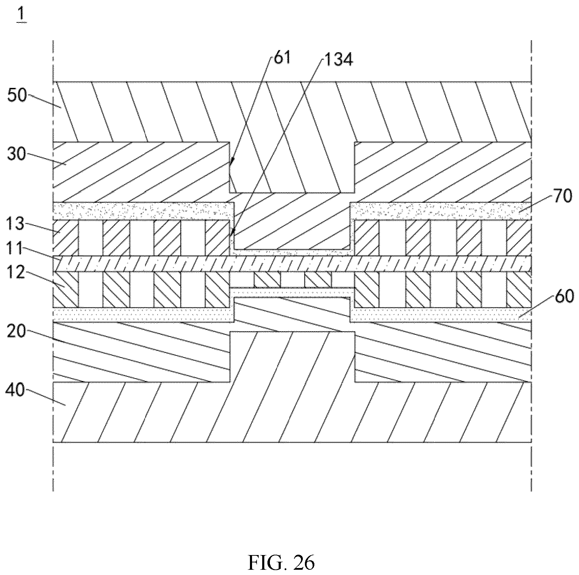

FIG. 26 is a partial sectional view of the charging coil module 1 shown in FIG. 22 in another implementation.

As shown in FIG. 26, the structure of the charging coil module 1 in this implementation is roughly the same as that of the charging coil module 1 shown in FIG. 25. Same details are not described again. A difference lies in that the second accommodating space 134 of the second coil 13 in this implementation may be completely hollow-out. In this case, the second accommodating space 134 is a through hole. The charging coil module 1 may be filled with more nanocrystalline and/or graphite sheets by using the second accommodating space 134 of the second coil 13, to improve charging efficiency of the charging coil module 10.

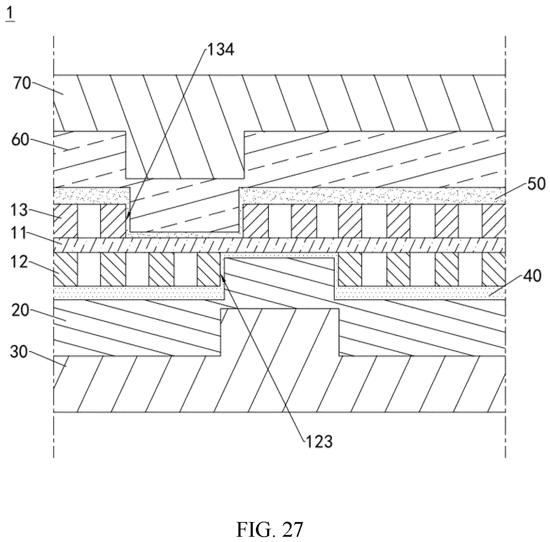

FIG. 27 is a partial sectional view of the charging coil module 1 shown in FIG. 22 in another implementation.

As shown in FIG. 27, the structure of the charging coil module 1 in this implementation is roughly the same as that of the charging coil module 1 shown in FIG. 26. Same details are not described again. A difference lies in that both the first accommodating space 123 of the first coil 12 and the second accommodating space 134 of the second coil 13 in this implementation are completely hollow-out.

For example, the first accommodating space 123 of the first coil 12 and the second accommodating space 134 of the second coil 13 may be staggered relative to the base material 11. In another implementation, the first accommodating space 123 of the first coil 12 and the second accommodating space 134 of the second coil 13 may be symmetrically disposed relative to the base material 11.

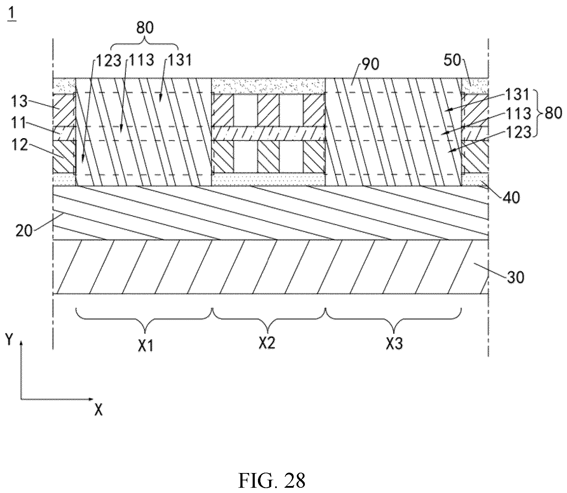

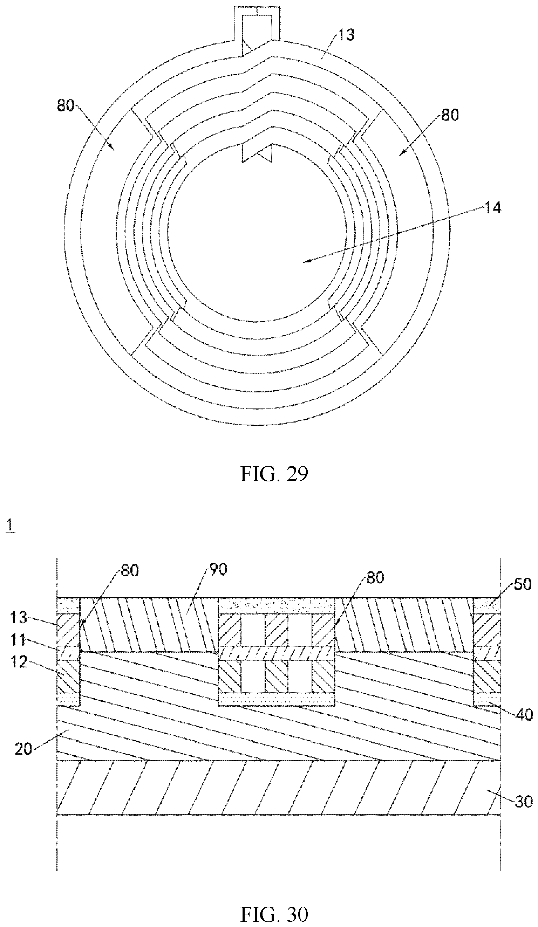

FIG. 28 is a partial sectional view of the charging coil module 1 shown in FIG. 8 in another implementation. FIG. 29 is a top view of a partial structure of the charging coil module 1 shown in FIG. 28.

As shown in FIG. 28 and FIG. 29, the structure of the charging coil module 1 in this implementation is roughly the same as that of the charging coil module 1 shown in FIG. 8. Same details are not described again. A difference lies in that the base material 11 in this implementation is provided with a base material through hole 113. The second coil 13 includes the second accommodating space 134. Both the first accommodating space 123 of the first coil 12 and the second accommodating space 134 of the second coil 13 are completely hollow-out. The base material through hole 113 may communicate the first accommodating space 123 of the first coil 12 and the second accommodating space 134 of the second coil 13. In this case, the first accommodating space 123 of the first coil 12, the base material through hole 113, and the second accommodating space 134 of the second coil 13 jointly form a first through hole 80 of the charging coil module 1.

For example, the first through hole 80 may not communicate with the coil through hole 14, in other words, the first through hole 80 is spaced from the coil through hole 14. In another implementation, the first through hole 80 may alternatively communicate with the coil through hole 14.

For example, the charging coil module 1 may further include a magnetic piece 90. The magnetic piece 90 may be a magnet. The magnetic piece 90 may be located in the first through hole 80 and connected to the first nanocrystalline layer 20. In this case, the first nanocrystalline layer 20 may be connected to a surface that is of the first cover film 40 and that is away from the first coil 12, and a surface that is of the magnetic piece 90 and that is exposed from the first cover film 40. The first graphite layer 30 may be connected to a surface that is of the first nanocrystalline layer 20 and that is away from the first cover film 40.

In this implementation, there may be two first through holes 80. In this case, there are also two pieces of the first accommodating space 123 of the first coil 12, two pieces of the second accommodating space 134 of the second coil 13, and two base material through holes 113 correspondingly. The charging coil module 1 in this implementation may be prepared by using the preparation method in the foregoing implementation. Thicknesses, in different regions, of structures of various parts of the prepared charging coil module 1 may be shown in the following Table 3.

**Table 3**

| Structure | Material | Thickness (micrometer) | | |
|---|---|---|---|---|
| | | X1 | X2 | X3 |
| Second cover film | PI | | 7.5 | |
| | AD | | 5 | |
| Second coil | Plated copper | | 80 | |
| | Copper | | | |
| Base material | PI | | 12.5 | |
| First coil | Copper | | 80 | |
| | Plated copper | | | |
| First cover film | AD | | 5 | |
| | PI | | 7.5 | |
| Magnetic piece | Magnet | 170 | | 170 |
| First nanocrystalline layer | Nanocrystalline | 59 | 59 | 59 |
| First graphite layer | Graphite sheet | 100 | 100 | 100 |

It may be understood that, in the charging coil module 1 in this implementation, the base material through hole 113 is disposed to communicate the first accommodating space 123 of the first coil 12 and the second accommodating space 134 of the second coil 13, to form the first through hole 80. In addition, the magnetic piece 90 is disposed inside the first through hole 80. In this way, when the charging coil module 1 in this implementation is used in the electronic device 100, accurate positioning with a wireless charger may be implemented by using the magnetic piece 90 disposed inside the charging coil module 1, to improve charging efficiency.

In some implementations, the charging coil module 1 may alternatively not include the base material through hole 113. In this case, the magnetic piece 90 may be disposed in the first accommodating space 123 and/or the second accommodating space 134.

FIG. 30 is a partial sectional view of the charging coil module 1 shown in FIG. 28 in another implementation.

As shown in FIG. 30, a structure of the charging coil module 1 in this implementation is roughly the same as that of the charging coil module 1 shown in FIG. 28. A same part is not described again. A difference lies in that the magnetic piece 90 in this implementation fills only a part of space of the first through hole 80.

For example, the magnetic piece 90 may fill a part of space that is of the first through hole 80 and that is away from the first nanocrystalline layer 20. In this case, a part of the first nanocrystalline layer 20 may fill remaining space of the first through hole 80. In this way, compared with a charging coil module 1 in which no nanocrystalline is disposed in the first through hole 80, in the charging coil module 1 in this implementation, both the magnetic piece 90 and the nanocrystalline are disposed inside the first through hole 80, so that when the charging coil module 1 is used in the electronic device 100, accurate positioning with the wireless charger can be implemented, and a magnetic loss can be reduced. This helps improve charging power.

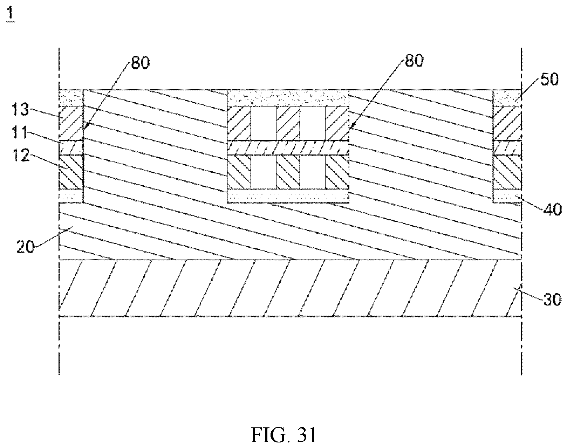

FIG. 31 is a partial sectional view of the charging coil module 1 shown in FIG. 28 in another implementation.

As shown in FIG. 31, a structure of the charging coil module 1 in this implementation is roughly the same as that of the charging coil module 1 shown in FIG. 28. A same part is not described again. A difference lies in that the charging coil module 1 in this implementation does not include the magnetic piece 90. A part of the first nanocrystalline layer 20 may completely fill the first through hole 80.

It may be understood that, compared with a charging coil module 1 in which the first through hole 80 is not disposed, in the charging coil module 1 in this implementation, the first through hole 80 may be disposed, so that the charging coil module 1 has more available space to be filled with more nanocrystalline, to reduce magnetic loss. In addition, when outer diameters of the charging coil modules 1 are the same, the first nanocrystalline layer 20 of the charging coil module 1 in this implementation is thinner, and an overall thickness of the charging coil module 1 is smaller. This is more conducive to miniaturization of the charging coil module 1.

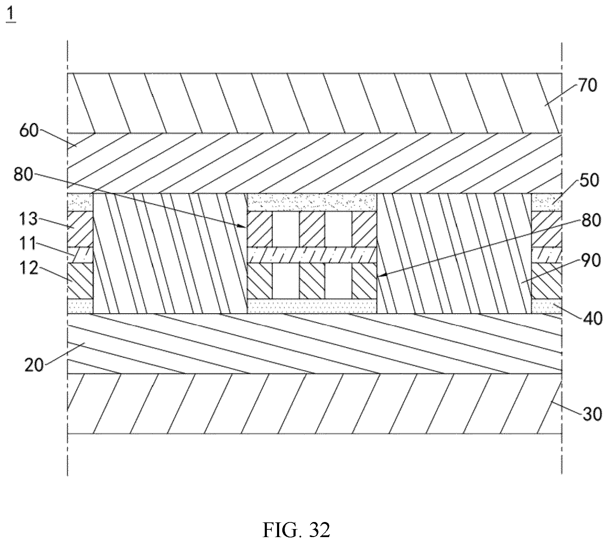

FIG. 32 is a partial sectional view of the charging coil module 1 shown in FIG. 28 in another implementation.

As shown in FIG. 32, a structure of the charging coil module 1 in this implementation is roughly the same as that of the charging coil module 1 shown in FIG. 28. A same part is not described again. A difference lies in that the charging coil module 1 in this implementation may further include a second nanocrystalline layer 60 and a second graphite layer 70.

For example, the second nanocrystalline layer 60 may be connected to a surface that is of the second cover film 50 and that is away from the second coil 13, and a surface that is of the magnetic piece 90 and that is exposed from the second cover film 50. The second graphite layer 70 is connected to a surface that is of the second nanocrystalline layer 60 and that is away from the second coil 13. In this way, the second nanocrystalline layer 60 and the second graphite layer 70 are disposed, so that volumes of nanocrystalline and graphite in the charging coil module 1 are increased. This effectively increases charging efficiency of the charging coil module 1.

It should be noted that, in a case of no conflict, embodiments in this application and features in the implementations may be combined with each other, and any combination of features in different implementations also falls within the protection scope of this application. In other words, the plurality of embodiments described above may further be randomly combined based on an actual requirement.

It should be noted that all the foregoing accompanying drawings are example diagrams of this application, and do not represent an actual size of a product. In addition, a size proportion relationship between components in the accompanying drawings is not intended to limit an actual product in this application.

The foregoing descriptions are merely some embodiments and implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging coil module (1), comprising a base material (11) and a first coil (12), wherein the base material (11) comprises a first surface (111), the first coil (12) is disposed on the first surface (111), a quantity of turns of the first coil (12) is greater than or equal to 2, and a distance between two adjacent turns of the first coil (12) ranges from 40 micrometers to 100 micrometers.

2. The charging coil module (1) according to claim 1, wherein each turn of the first coil (12) comprises a first conductive part (1021a) and a second conductive part (1051a), the first conductive part (1021a) is disposed on the first surface (111), and the second conductive part (1051a) covers the first conductive part (1021a).

3. The charging coil module (1) according to claim 2, wherein a thickness of the first conductive part (1021a) ranges from 10 micrometers to 60 micrometers.

4. The charging coil module (1) according to any one of claims 1 to 3, wherein a thickness of the first coil (12) is greater than 50 micrometers.

5. The charging coil module (1) according to any one of claims 1 to 4, wherein the base material (11) comprises a second surface (112), and the second surface (112) and the first surface (111) are disposed opposite to each other; and
the charging coil module (1) further comprises a second coil (13), the second coil (13) is disposed on the second surface (112), a quantity of turns of the second coil (13) is greater than or equal to 2, and a distance between two adjacent turns of the second coil (13) ranges from 40 micrometers to 100 micrometers.

6. The charging coil module (1) according to any one of claims 1 to 5, wherein the charging coil module (1) further comprises a first cover film (40), a first nanocrystalline layer (20), and a first graphite layer (30);
the first cover film (40) is disposed on a side that is of the first coil (12) and that is away from the base material (11), and the first nanocrystalline layer (20) and the first graphite layer (30) are sequentially stacked on the first cover film (40);
the first coil (12) has first accommodating space (123), and the first accommodating space (123) is a groove or a through hole; and
a part of the first cover film (40) is disposed in the first accommodating space (123), and a part of the first nanocrystalline layer (20) is disposed in the first accommodating space (123).

7. The charging coil module (1) according to claim 6, wherein the first nanocrystalline layer (20) is provided with a first recessed region (21), and a part of the first graphite layer (30) is disposed in the first recessed region (21).

8. The charging coil module (1) according to claim 6, wherein the first graphite layer (30) is provided with a second recessed region (31), and a part of the first nanocrystalline layer (20) is disposed in the second recessed region (31).

9. The charging coil module (1) according to any one of claims 6 to 8, wherein the first coil (12) encloses a first hollow region (126), and the first accommodating space (123) is spaced from the first hollow region (126), or the first accommodating space (123) communicates with the first hollow region (126).

10. The charging coil module (1) according to any one of claims 6 to 9, wherein the first coil (12) comprises a first part (121) and a second part (122) that are separately disposed, and the first accommodating space (123) is located between the first part (121) and the second part (122); or
the first coil (12) comprises a first part (121), and the first accommodating space (123) is located on a side of the first part (121).

11. The charging coil module (1) according to any one of claims 1 to 4, wherein the first coil (12) has first accommodating space (123), and the first accommodating space (123) is a groove or a through hole; and
the charging coil module (1) comprises a magnetic piece (90), and the magnetic piece (90) is disposed in the first accommodating space (123).

12. The charging coil module (1) according to any one of claims 5 to 11, wherein the charging coil module (1) further comprises a second cover film (50), a second nanocrystalline layer (60), and a second graphite layer (70);
the second cover film (50) is disposed on a side that is of the second coil (13) and that is away from the base material (11), and the second nanocrystalline layer (60) and the second graphite layer (70) are sequentially stacked on the second cover film (50);
the second coil (13) has second accommodating space (134), and the second accommodating space (134) is a groove or a through hole; and
a part of the second cover film (50) is disposed in the second accommodating space (134), and a part of the second nanocrystalline layer (60) is disposed in the second accommodating space (134).

13. The charging coil module (1) according to claim 12, wherein the second nanocrystalline layer (60) is provided with a third recessed region (61), and a part of the second graphite layer (70) is disposed in the third recessed region (61).

14. An electronic device (100), comprising a battery (4) and the charging coil module (1) according to any one of claims 1 to 13, wherein the charging coil module (1) is configured to charge the battery (4).

15. A charger (200), comprising a housing (201) and the charging coil module (1) according to any one of claims 1 to 13, wherein the charging coil module (1) is disposed on the housing (201).

16. A charging system (1000), comprising an electronic device (100) and a charger (200), wherein at least one of the electronic device (100) and the charger (200) comprises the charging coil module (1) according to any one of claims 1 to 13, and the charger (200) is configured to charge the electronic device (100).
